# EUROPÄISCHE PATENTSCHRIFT

(11) **EP 4 624 131 B1**
(45) Veröffentlichungstag und Bekanntmachung des Hinweises auf die Patenterteilung: **28.10.2026**
(21) Anmeldenummer: 25194629.9
(22) Anmeldetag: 25.06.2021
(51) Int. Cl.: G01B 11/06, B29C 48/09, B29C 48/92, G01N 21/952

(54) **THZ-MESSVERFAHREN UND THZ-MESSVORRICHTUNG ZUM VERMESSEN EINES MESSOBJEKTES, INSBESONDERE EINES ROHRES**
THZ MEASURING METHOD AND THZ MEASURING DEVICE FOR MEASURING A MEASUREMENT OBJECT, IN PARTICULAR A TUBE
PROCÉDÉ DE MESURE THZ ET DISPOSITIF DE MESURE THZ PERMETTANT DE MESURER UN OBJET DE MESURE, EN PARTICULIER UN TUYAU

(30) Priorität: 25.06.2020 DE 102020116810
(43) Veröffentlichungstag der Anmeldung: 01.10.2025
(62) Dokumentnummer(n) der früheren Anmeldung(en) nach Art. 76 EPÜ: 21739948.4 / 4 172 558
(73) Patentinhaber: CiTEX Holding GmbH, 49324 Melle (DE)
(72) Erfinder: Böhm, Roland, 48341 Altenberge (DE)
(74) Vertreter: Bremer, Ulrich

(56) Entgegenhaltungen:
- DE-A1- 102016 105 599
- DE-A1- 102018 128 248
- DE-U1- 202016 008 526

## Beschreibung

Die Erfindung betrifft ein THz-Messverfahren und eine THz- Messvorrichtung zum Vermessen eines Messobjektes, insbesondere eines Rohres aus einem Kunststoff oder Gummi.

THz-Messverfahren und Messvorrichtungen können insbesondere zum Vermessen durchlaufender Profile, insbesondere von ein- oder mehrschichtigen Rohrprofilen aus einem für THz-Strahlung durchlässigen Material wie Kunststoff oder Gummi eingesetzt werden. Die THz-Strahlung wird an Grenzflächen von Materialien mit unterschiedlichem Brechungsindex, insbesondere an Außenflächen und Innenflächen eines Rohrprofils, teilweise reflektiert und zu dem aussendenden THz-Sensor zurück reflektiert, so dass Laufzeiten des THz-Messsignals ermittelt werden können. Den Laufzeiten können in Luft bzw. Vakuum aufgrund der bekannten Lichtgeschwindigkeit direkt Laufstrecken und somit Abstände zugeordnet werden, in einem Kunststoffmaterial kann bei Kenntnis des Brechungsindex entsprechend ebenfalls eine Laufzeit und somit ein Abstand zugeordnet werden.

Zur Vermessung von Rohren sind insbesondere zwei grundlegende Verfahren bekannt:
Bei einer einseitigen Messung radial durch ein Rohr gegen einen gegenüber liegenden Reflektor sind ein oder mehrere Sensoren jeweils mit gegenüber liegendem Spiegel bzw. Reflektor z.B. rotatorisch um ein Rohr angeordnet. Aus der bekannten Leerlaufzeit innerhalb der Messvorrichtung und den Laufzeiten der Reflexions-Messsignale bzw. Reflexions-Peaks, die durch die Reflexion am Rohr bzw. der Außenfläche oder Innenfläche des Rohres erfolgen, können Laufzeitdifferenzen und hieraus mittels des Brechungsindex Wanddicken ermittelt werden.

Hierbei können Formabweichungen des zu vermessenden Rohres eine auswertbare Rückreflexion, insbesondere im Bereich der zweiten Wanddicke der Rohre, verhindern. Weiterhin kann nachteilhaft sein, dass bei größeren Wanddicken oder absorbierenden Additiven die THz-Strahlung so stark absorbiert wird, dass die reflektierten Signale zu gering sind, um sie verlässlich auswerten zu können.

Bei einer einfachen einseitigen Messung radial durch die Rohrwandung sind im Allgemeinen mehrere Sensoren z.B. rotatorisch um ein Rohr angeordnet, z. B. gegenüber liegend. Die THz-Sensoren bzw. THz-Transceiver senden einen THz-Sendestrahl entlang der optischen Achse radial durch die Rohrwandung und messen Reflexionsstrahlung bzw. Reflexions-Peaks, woraus der Durchmesser des Rohres und die Wanddicken des Rohres ermittelt werden können. Hierbei können z. B. vier oder acht THz-Sensoren verwendet werden, aus deren Informationen sich der Durchmesser auch z. B. bei einer Fehllage berechnen lassen kann. Um die Wanddicke sicher zu berechnen, ist hierbei die Kenntnis des Materials bzw. seines Brechungsindex erforderlich, wobei der Brechungsindex durch das Verhältnis der Lichtgeschwindigkeit in dem Material zu der Lichtgeschwindigkeit im Vakuum (bzw. Luft) festgelegt ist.

Der Brechungsindex ist jedoch im Allgemeinen material- oder auch materialchargenabhängig und weiterhin temperaturabhängig. Somit ist für eine korrekte Messung im Allgemeinen eine Ermittlung eines Referenz- Brechungsindex an einer Materialprobe erforderlich.

Die DE 20 2016 008 526 U1 beschreibt eine Vorrichtung zum Messen des Durchmessers und / oder der Wanddicke eines im Querschnitt im Wesentlichen kreisförmigen und mittels Führungsmitteln in Richtung seiner Längsachse durch die Vorrichtung geführten Strangs. Hierbei ist ein Sender zum Aussenden von Terahertz-Strahlung mit einer Strahlungsoptik, und ein dem Sender gegenüberliegender Reflektor vorgesehen, wobei eine Auswerteeinrichtung dazu ausgebildet ist, anhand der Messsignale den Durchmesser und / oder die Wanddicke des Strangs zu bestimmen.

Die DE 10 2018 128 248 A1 beschreibt ein Verfahren zur Bestimmung des Brechungsindex eines rohrförmigen Körpers, der in einem Messbereich durch eine Sendeeinrichtung mit Messstrahlung bestrahlt wird, die an seinen Grenzflächen reflektiert und durch eine Empfangseinrichtung detektiert wird. Anhand der reflektierten Messstrahlung wird die optische Wanddicke eines Wandabschnitts bestimmt, und aus einem Vergleich der Außen- und Innendurchmesser mit der optischen Wanddicke nachfolgend der Brechungsindex bestimmt.

Die DE 10 2018 124 175 A1 beschreibt ein Verfahren und eine Vorrichtung zum Steuern einer Produktionsanlage für plattenförmige oder strangförmige Körper, bei dem der Körper entlang einer Förderrichtung durch einen Messbereich befördert und mittels Messstrahlung bestrahlt wird, die zumindest teilweise in den Körper eindringt und von dem Körper reflektierte Messstrahlung detektiert wird, wobei eine Brechungsindexbestimmung und/oder eine Absorptionsbestimmung mindestens eines Produktionsparameters einer Produktionsanlage erfolgt.

Die DE 10 2016 105 599 A1 zeigt eine Terahertz-Messvorrichtung zum Vermessen eines Prüfobjektes, wobei die Terahertz-Messvorrichtung eine THz-Sende- und Empfangseinheit zum Aussenden von Terahertz-Strahlung in einem Abstrahlraumwinkel entlang einer optischen Achse und zum Empfang reflektierter Terahertz-Strahlung sowie zum Erzeugen einer Signalamplitude, und eine Steuer- und Auswerteeinrichtung zum Aufnehmen und Auswerten der Signalamplitude aufweist. Hierbei ermittelt die Steuer-und Auswerteeinrichtung aus der Signalamplitude Fehlstellen des Prüfobjektes.

Der Erfindung liegt daher die Aufgabe zugrunde, eine THz- Messvorrichtung und ein THz-Messverfahren zu schaffen, die eine sichere Vermessung eines Messobjektes ermöglichen.

Diese Aufgabe wird durch ein THz-Messverfahren und eine THz-Messvorrichtung nach den unabhängigen Ansprüchen gelöst. Die Unteransprüche beschreiben bevorzugte Weiterbildungen.

Die erfindungsgemäße THz-Messvorrichtung kann insbesondere zur Durchführung des erfindungsgemäßen THz-Messverfahrens eingesetzt werden; das erfindungsgemäße THz-Messverfahren kann insbesondere mit einer erfindungsgemäßen THz-Messvorrichtung durchgeführt werden.

Erfindungsgemäß ist somit eine Messung über einen Messbereich von zwei gegenüber liegenden Messpositionen aus vorgesehen. Die Messungen erfolgen durch eine Sensoranordnung mit einer ungeraden Anzahl von mehr als zwei bzw. mehreren Sensoren, wobei die Sensoranordnung die Messungen von einer ersten Messposition und von einer zweiten Messposition aus vornimmt.

Hierbei ist vorgesehen, dass die Sensoranordnung ein Paar aus zwei näherungsweise gegenüber liegenden Sensoren aufweist, d.h. einem ersten Sensor an der ersten Messposition und einem zweiten Sensor an der zweiten Messposition, die somit in der leeren Messvorrichtung, d. h. ohne aufgenommenes Messobjekt, eine Leerlaufstrecke zwischen sich definieren.

Die beiden Sensoren können zum einen mit einer festen Winkeleinstellung vorgesehen sein. Bei der Ausführungsform mit zwei näherungsweise gegenüber liegenden Sensoren liegen diese somit vorteilhafterweise auf einer gemeinsamen optischen Achse. Diese Ausbildung mit starr angeordneten Sensoren ist insbesondere vorteilhaft, wenn das Messobjekt nachfolgend genau auf der optischen Achse bzw. in der Leerlaufstrecke positioniert werden kann.

Alternativ hierzu können die Sensoren in ihren Messpositionen auch schwenkbar aufgenommen sein und somit in einer Grundstellung auf einer gemeinsamen optischen Achse liegen und aus dieser Grundstellung heraus jeweils unter einem Einstellwinkel verstellt werden. Diese Ausbildung mit schwenkbaren Sensoren ist insbesondere bei einer nachfolgenden Vermessung von Messobjekten mit dezentraler Positionierung vorteilhaft, bei der somit ein Mittelpunkt des Messobjektes gegebenenfalls auch außerhalb der Leerlaufstrecke positioniert wird, so dass die Sensoren in ihrer Grundstellung die THz-Sendestrahlen nicht mehr senkrecht auf die Außenfläche des Messobjektes senden würden. Durch die Schwenkbarkeit können die Sensoren somit nach dem Kalibrierungsschritt von der Grundstellung weg geschwenkt werden.

**In** einer Kalibriermessung, die insbesondere bereits werksseitig erfolgen kann, wird zunächst eine Leerlaufzeit des Messsignals durch die Leerlaufstrecke bzw. zwischen den beiden Messpositionen ermittelt.

Bei der erfindungsgemäßen Ausbildung mit zwei Messpositionen, d.h. einem Sensorpaar, kann die Kalibrierung gemäß einer Ausführungsform durch einen in den Messbereich bzw. die Referenzstrecke temporär eingebrachten Kalibrier-Reflektor erfolgen, z. B. ein Präzisionsblech mit genau bekannter Dicke und zwei spiegelnden Außenflächen, so dass von beiden Seiten bzw. beiden Messpositionen jeweils eine Leerlauf-Teilzeit ermittelt werden kann, und somit insbesondere das Doppelte der ermittelten Laufzeit beider Messpositionen, insbesondere zuzüglich einer Streckenkompensation der Reflektordicke, zur Ermittlung der Leerlaufzeit und der Leerlaufstrecke bzw. Referenzstrecke herangezogen werden kann.
Alternativ zu einem Kalibrier-Reflektor kann auch ein anderes Kalibrier-Objekt mit bekannter Dicke und z.B. ganz oder teilweise reflektierenden Grenzflächen eingebracht werden, z.B. ein Präzisions-Rohr aus z.B. Kunststoff, das an seinen Außenflächen somit teilweise reflektiert, so dass in an sich bekannter Weise die Reflektionspeaks herangezogen werden können, mit bekannter Dicke zwischen den reflektierenden Außenflächen. Insbesondere Kalibrierrohr ist hierbei vorteilhaft, da zum einen keine Reflektoren erforderlich sind und alle installierten Sensoren mittels des gemeinsamen zentralen Kalibrierrohrs eingemessen werden können, insbesondere bei einem präzise runden und genau bekannten Kalibrierrohr, z.B. aus Kunststoff oder auch Keramik.

Diese Kalibrierung kann bereits werkseitig erfolgen. Nachfolgend werden dann zur Ermittlung der Wanddicken und z.B. auch eines Gesamt- Durchmessers eines zu vermessenden Profils, insbesondere Rohrprofils, Messungen von beiden Seiten bzw. eine wechselseitige Messung durchgeführt, d.h. von der ersten und zweiten Messposition, z.B. von links und von rechts. Somit werden durchgeführt:
- eine erste Messung einer ersten Außenlaufzeit von der ersten Messposition, d. h. dem ersten Sensor, zu einer Außenfläche des Messobjektes, einer ersten Wand-Laufzeit durch den sich anschließenden Wandbereich des Messobjektes zu dessen Innenraum und einer Innenlauzeit durch den Innenraum,
- und entsprechend eine zweite Messung der entsprechenden zweiten Außenlaufzeit zwischen der zweiten Messposition und der Außenfläche des Messobjektes, einer zweiten Wand-Laufzeit durch einen zweiten Wandbereich des Messobjektes und gegebenenfalls auch einer weiteren Innenlaufzeit, d.h. z.B. als weiter Messung der bereits in der ersten Messung ermittelten Wertes der Innenlaufzeit.

Bei der Ausführungsform mit zwei gegenüber liegenden Messpositionen , z.B. zwei Sensoren, können somit zwei sich entsprechende direkte Messungen dieser Laufzeiten erfolgen; die Innenlaufzeit des THz-Sendestrahls durch den Innenraum, d. h. zwischen den Innenflächen der Wandbereiche, kann somit von zumindest der ersten Messposition her durchgeführt werden; bei der Ausführungsform mit zwei gegenüberliegenden Messpositionen können insbesondere entsprechende Messungen von beiden Seiten her erfolgen, mit nachfolgender Mittelung der so gemessenen Werte.

Nachfolgend kann dann aus den ermittelten Laufzeiten, d.h. den beiden Außenlaufzeiten, den beiden Wand-Laufzeiten und der (direkt gemessenen oder gemittelten) Innenlaufzeit eine Gesamtlaufzeit ermittelt werden. Nachfolgend kann somit eine Differenz der Gesamtlaufzeit zu der bei der Kalibrierung ermittelten Leerlaufzeit ermittelt werden, sodass diese Differenz somit eine zusätzliche Materiallaufzeit darstellt, die die materialbedingte zeitliche Gesamt-Verzögerung darstellt.

Wenn bei der ersten und zweiten Messung sichergestellt ist, dass das Messobjekt mit seinem Mittelpunkt auf der Leerlaufstrecke zwischen den Messpositionen liegt, können die beiden Messungen mit den starren Sensoren entlang der gemeinsamen optischen Achse durchgeführt werden, wodurch somit direkt die beiden Außenlaufzeiten, die beiden Wandlaufzeit und die eine oder zwei Innenlaufzeiten gemessen werden können.

Wenn hingegen in der ersten und zweiten Messung das Messobjekt mit seinem Mittelpunkt auch dezentral liegen kann, kann bei der Ausführungsform mit den schwenkbaren Sensoren zunächst eine Ausrichtung der Sensoren durch Schwenken in der Messebene erfolgen, so dass die optischen Achsen der beiden Sensoren senkrecht auf der Außenfläche des Messobjektes liegen. Nachfolgend erfolgt dann die erste und zweite Messung, wobei anschließend bei der Ermittlung der Laufzeiten berücksichtigt wird, dass die Außenlaufzeiten, d.h. die Laufzeiten von den Messpositionen zu der Außenfläche, entsprechend den Einstellwinkeln vergrößert ist; dies wird bei der Ermittlung somit kompensiert.

Nachfolgend kann aus dieser materialbedingten zeitlichen Gesamt-Verzögerung und den einzelnen Laufzeiten, insbesondere den Wand- Laufzeiten, eine weitergehende Berechnung bzw. Ermittlung angesetzt werden, wobei die Außenlaufzeiten und die Innenlaufzeit grundsätzlich bereits den entsprechenden Werten der Kalibriermessung entsprechen, so dass die materialbedingten zeitliche Gesamt-Verzögerung den Wandbereichen zugeordnet werden kann. Hieraus kann dann eine äquivalente Luftlaufzeit im Rohrwandungsbereich ermittelt werden, die der Laufzeit des Messsignals in der - unbekannten - Gesamtstrecke der Rohrwandungen, wenn diese den gleichen Brechungsindex wie das umgebene Medium, d.h. Luft, hätte, entspricht.

Da aus der Kalibrierung die Leerlaufzeit und die Leerlaufstrecke bekannt sind, kann erfindungsgemäß eine Gesamt-Wanddicke (Summe der Dicken der Rohrwandungen) ermittelt werden, ohne dass hierbei ein materialspezifischer Wert wie der Brechungsindex oder die materialspezifische Lichtgeschwindigkeit anzusetzen ist.

Somit kann aus der aktuellen Vermessung des Rohres und der vorherigen Kalibrierung, aus der die Leerlaufzeit und Leerlaufstrecke bekannt sind, sowie dieser Ermittlung der Quotienten bzw. Verhältnisse die Gesamtdicke der Rohrwandungen ermittelt werden, ohne hierbei den Brechungsindex bzw. die Lichtgeschwindigkeit in dem Material als Größe einsetzen zu müssen. Es kann vielmehr materialunabhängig durch Bildung dieser Verhältnisse bzw. Quotienten die Gesamt-Strecke der Rohrwandungen direkt aus den Messsignalen, die auf der gemeinsamen optischen Achse ermittelt werden, sowie der Kalibrierung ermittelt werden.

Nachfolgend können aus einer Verteilung bzw. dem Verhältnis der Wand-laufzeiten bzw. aus den vorher ermittelten äquivalenten Rohrwandbereich die einzelnen Wandungsdicken bzw. Rohrwanddicken als Anteile, und somit auch als absolute Werte der Wanddicken ermittelt werden.

Die Kalibrierung kann bereits werksseitig erfolgen und gegebenenfalls nachfolgend wiederholt werden, so dass nachfolgend aus aktuellen Laufzeitmessungen eine Wanddicke ohne Kenntnis des Brechungsindex bzw. der Lichtgeschwindigkeit in dem Material ermittelt werden kann.

Der hierbei erfindungsgemäß erforderliche Mehraufwand ist gering; die Kalibrierung kann vorab erfolgen und die nachfolgenden Messungen sind ohne relevanten Mehraufwand möglich.

Hierbei können mehrere Paare von Sensoren vorgesehen sein, die um den Messbereich herum angeordnet sind.

Gemäß einer Ausführungsform ist ein Verfahren vorgesehen, bei dem die THz-Sensoranordnung einen oder mehrere kontinuierlich um den Messbereich rotierende Paare von THz-Sensoren aufweist, der oder die während der Rotation die THz-Messungen an den Mess-Positionen durchführen, insbesondere fortlaufend während der Rotation, vorzugsweise zur Ausbildung am Außenumfang des Messobjektes helisch umlaufend angeordneter, sich überlappender Messungen für eine vollständige Vermessung des Messobjektes. Bei einer Anordnung aus mehreren rotierenden Sensoren wird z.B. eine bessere Überdeckung eines in einer Förderrichtung geförderten Messobjektes erreicht als mit lediglich einem rotierenden Sensor, so dass z.B. eine höhere Fördergeschwindigkeit möglich ist. Weiterhin kann eine geringere Rotationsgeschwindigkeit eingestellt werden, die somit eine geringere Belastung hervorruft.

Indem die Messung fortlaufend während der Rotation erfolgt, kann somit der THz-Sendestrahl bzw. die mehreren THz-Sendestrahlen am Außenumfang des Messobjektes helisch (schraubenförmig) umlaufend verlaufen, insbesondere mit sich überlappenden Messungen bzw. helischen Mess-Spuren für eine vollständige Vermessung des Messobjektes.

Ein wesentlicher Vorteil der Erfindung liegt in einer Ermittelbarkeit der Wanddicken, und weiterhin entsprechend des Gesamt-Durchmessers des Rohres, ohne Kenntnis des Brechungsindex, der sich materialchargen-abhängig und temperaturabhängig ändern kann. Weiterhin kann hierdurch nachfolgend auch der Brechungsindex selbst durch die so ermittelten Wanddicken und die Wand-Laufzeiten des Messsignals ermittelt werden. Hieraus kann jeweils aktuell eine Auswertung der Materialqualität erfolgen, so kann aus der Konstanz des so ermittelten Brechungsindex z.B. nachgewiesen bzw. überprüft werden, dass die Materialcharge sich nicht verändert hat und die Materialmischung homogen ist. Dies ist insbesondere bei Vermessung von Rohren vorteilhaft, die z.B. bei Zufuhr gekörnten Materials oder Granulats aus unterschiedlichen Ausgangsstoffen von einem Extruder ausgegeben werden, und die z.B. variierende Additiv-Anteile enthalten können. Hierbei kann insbesondere ein Rohr nach seiner Extrusion in der Messvorrichtung fortlaufend vermessen werden, insbesondere mit einer Transportachse oder Förderachse senkrecht durch die Messvorrichtung bzw. senkrecht zu den optischen Achsen der Sensoren.

Sollte bei Messfeldaufnahme aufgrund sehr starker Deformationen und damit verbundener destruktiver Reflektion des Messsignals eine saubere Auswertung der Laufzeit für den Innendurchmesser nicht möglich sein, können allein durch die Laufzeit innerhalb der Rohrwandungen mit dem zuletzt ermittelten Brechungsindex die Wanddicken bestimmt werden. Hierbei kann zunächst davon ausgegangen werden, dass sich das Materialgefüge innerhalb kürzerer Zeitabstände nicht relevant ändert, bzw. im Wesentlichen unverändert bleibt, und somit bereits eine Gesamt-Wanddicke aus den Messsignal ermittelt werden, woraus dann ggf. auch die einzelnen Wanddicken abgeschätzt werden, auch wenn z.B. ein Messsignal bzw. Messpeak fehlen sollte.

Sollten z.B. Materialanhäufungen nur an einer Wandung vorhanden sein, kann die Temperatur zwischen der linken und rechten Wandung abweichen. Damit verändert sich als materialspezifisches Verhalten der Brechungsindex. Dies kann als zusätzliche Information an den Anlagenbediener ausgegeben werden, da die Messungen nicht eindeutig valide sein werden. Bisher gehen Verfahren im Allgemeinen in vereinfachter Weise davon aus, dass der Brechungsindex innerhalb eines Querschnittschnitts aus einem homogenen Material konstant ist.

Um eine gegenseitige Beeinflussung der beiden Sensorstrahlen der zwei gegenüberliegenden THz-Sensoren zu vermeiden, sind die Sendestrahlen in unterschiedlichen Frequenzbereichen und/oder zeitlich versetzt und/oder werden in unterschiedlicher Polarität ausgegeben.

Als THz-Strahlung gemäß dieser Erfindung wird Terahertz-Strahlung, Radar-Strahlung und/oder Mikrowellenstrahlung verstanden. Der Frequenzbereich kann insbesondere zwischen 5 GHz bis 50 THz liegen, z.B. 10 GHz bis 5 THz, insbesondere mit vollelektronischen THz-Receivern, z.B. mit direkter Laufzeitmessung, Frequenzbenutzung und/oder gepulster Strahlung.

Indem der Brechungsindex bestimmt wird, kann somit bei einer Verarbeitung mehrerer Ausgangsstoffe auch auf ein Verhältnis der Materialzusammensetzung der Ausgangsstoffe geschlossen werden,
woraufhin z.B. die Förderschnecken der Materialzuführung relativ zu einander angesteuert werden können,
d.h. es wird eine Regelung der Zusammensetzung durch Messung des Brechungsindex und Ansteuerung der Materialzuführung durchgeführt, ohne dass z.B. eine genaue Kenntnis der einzelnen Förderraten der Materialzuführung erforderlich ist.

Die Erfindung wird im Folgenden anhand beiliegender Zeichnungen an einigen Ausführungsformen erläutert. Es zeigen:
- Fig. 1: eine THz-Messvorrichtung gemäß einer ersten Ausführungsform;
- Fig. 2: die THz-Messvorrichtung aus Fig. 1 bei der Kalibrierung;
- Fig. 3: die THz-Messvorrichtung aus Fig. 1,2 bei der nachfolgenden Vermessung eines einwandigen Rohres als Messobjekt;
- Fig. 4: eine Anordnung zur Herstellung und Vermessung von Profilen und/oder Rohren mit einer THz-Messvorrichtung in Seitenansicht;

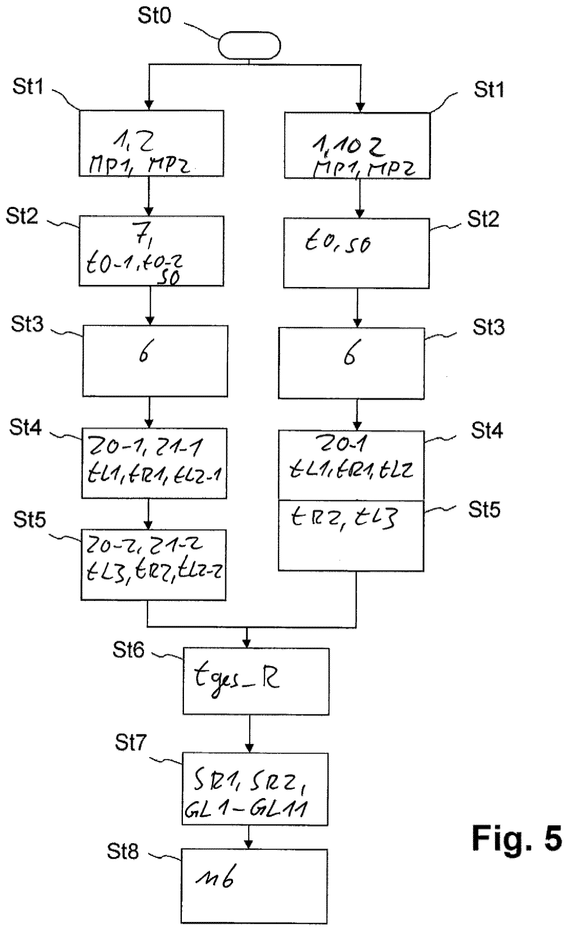

- Fig. 5: ein Flussdiagramm eines THz-Messverfahrens gemäß der Ausführungsform;
- Fig. 6: eine der Fig. 3 entsprechende Darstellung bei einer Ausführungsform mit in der Messebene schwenkbaren THZ- Sensoren und dezentralem Messobjekt.
- Fig. 7: die nachfolgende Ermittlung der Teilstrecken gemäß Fig. 6, zur Korrektur der Schrägstellung gegenüber Fig. 3

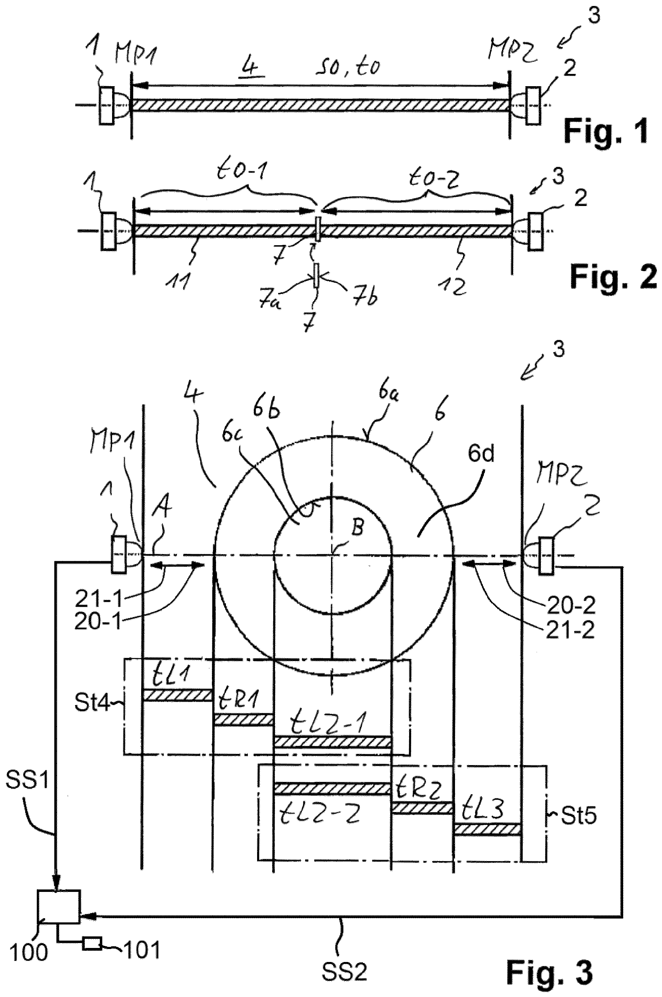

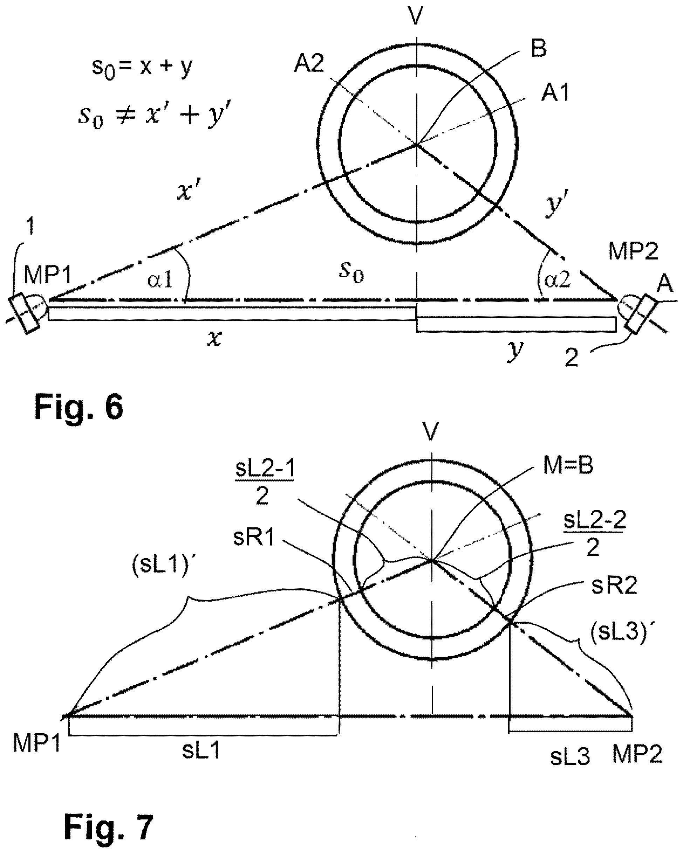

Eine THz-Messvorrichtung 3 weist gemäß der Ausführungsform der Figuren 1 bis 3 einen ersten, hier linken THz-Sensor 1 und einen zweiten, hier rechten THz-Sensor 2 auf, die zwischen sich einen Messbereich 4 mit einer Leerlaufstrecke (Leerlaufabstand, Referenzstrecke) s0 von z. B. 1 bis 2m definieren. Die beiden THz-Sensoren 1, 2 sind als THz-Transceiver, d. h. Sende- und Empfangseinrichtungen ausgebildet, insbesondere vollelektronisch mit einem THz-Receiver-Chip. Die THz-Sensoren 1, 2 sind auf einer gemeinsamen optischen Achse A in den Messbereich 4 ausgerichtet; geringfügige Abweichungen von der gemeinsamen optischen Achse A sind hierbei nicht relevant, solange diese Einstellungen nachher nicht verändert werden. Gemäß der Seitenansicht der Figur 6 können die THz- Sensoren 1, 2 insbesondere an einem gemeinsamen z. B. zylinderförmigen Gehäuse 5 aufgenommen sein und in den zwischen ihnen definierten Messbereich 4 ausgerichtet sein, der insbesondere zur Vermessung durchlaufender Messobjekte, insbesondere von Rohren 6, zu den Seiten hin offen ist. Somit wird gemäß Fig. 7 nach dem Start in Schritt St0 in einem Vorbereitungsschritt St1 diese Messvorrichtung 3 ausgebildet.

Anschließend erfolgt ein Kalibrierschritt St2, bei dem bei dieser Ausführungsform die Leerlaufstrecke s0, d. h. der Abstand zwischen den THz-Sensoren 1, 2, und die Leerlaufzeit t0 als Laufzeit der THz-Strahlung in der Leerlaufstrecke s0 kalibriert werden. Hierzu wird ein beidseitiger Kalibrier-Reflektor 7 in den Messbereich 4 senkrecht zu der optischen Achse A positioniert, sodass seine beiden Seitenflächen 7a, 7b senkrecht zur optischen Achse A stehen. Als Kalibrier-Reflektor 7 kann z. B. ein Präzisionsblech mit sehr genau bekannter Dicke, z. B. s7 = 0,507mm eingesetzt werden.

Nachfolgend folgt die Leermessung oder Referenzmessung, bei der der erste THz-Sensor 1 einen ersten THz-Kalibrierstrahl 11 entlang der optischen Achse A ausgibt und die von der Reflektorfläche 7a reflektierte THz-Strahlung detektiert, woraus somit die erste (linke) Leerlauf-Teilzeit t0-1 präzise ermittelt wird, d.h. die Laufzeit über den Abstand bzw. Leerstreckenteil s0-1 zwischen dem ersten Sensor 1 und der ersten Reflektorfläche 7a. Entsprechend gibt der zweite THz-Sensor 2 einen zweiten THz- Kalibrierstrahl 2 entlang der optischen Achse A in den Messbereich 4 aus, der von der zweiten Reflektorfläche 7b reflektiert und wiederum von dem THz-Sensor 2 detektiert wird, sodass entsprechend die zweite Leerlauf-Teilzeit t0-2 präzise gemessen wird, d.h. die Laufzeit über den zweiten Leerstreckenteil s0-2 zwischen dem zweiten Sensor 2 und der zweiten Reflektorfläche 7b.

Die THz-Sensoren 1, 2 senden hierbei THz-Strahlung entlang der optischen Achse aus und detektieren reflektierte THz-Strahlung, wobei sie die entsprechenden Laufzeiten t messen. Hierbei können direkte Laufzeitmessungen durchgeführt werden, bei denen Reflexions-Peaks detektiert werden, entsprechend können auch Messungen mit Frequenzmodulation durchgeführt werden, mit entsprechender Auswertung im Frequenzraum und Umrechnung auf entsprechende Laufzeiten.

Die Leerlaufzeit t0 für jeden der THz-Sensoren 1, 2, d.h. die Laufzeit der THz-Strahlung von jedem THz-Sensor 1, 2 über die Leerlaufstrecke s0 zu dem anderen THz-Sensor 2, 1 entspricht dann grundsätzlich dem doppelten der gemittelten Leerlauf-Teilzeit t0-1, t0-2 beider Sensormessungen zuzüglich einer Streckenkompensation der Reflektordicke s7, d.h. einer Streckenkompensation s7/c0.

Die Leerlaufzeit t0 kann im Vakuum und entsprechend in der Luft aufgrund der sehr genau bekannten Lichtgeschwindigkeit c0 = 299.792.458 m/s sehr genau in eine Leerlaufstrecke s0 umgerechnet werden, d.h. s0= t0*c0.

Alternativ hierzu kann die Leerlaufstrecke s0 somit auch direkt berechnet werden aus den Leerlauf-Teilzeit t0-1, t0-2 und der Reflektordicke s7, d.h. s0 = (t0-1 + t0-2)*c0 + s7.

Nach dieser Kalibrierung wird der Kalibrier-Reflektor 7 vorzugsweise wieder entfernt, sodass nachfolgend Vermessungen von Messobjekten 6 erfolgen können. Die THz-Sensoren 1, 2 werden nach dieser Kalibrierung nicht mehr verstellt, bzw. bei einer Verstellung ist eine nachfolgende Kalibrierung vorgesehen. Verstellungen der gesamten Messvorrichtung 1 relativ zu dem Messobjekt 6 beeinflussen die Kalibrierung nicht. Grundsätzlich kann der Kalibrier-Reflektor auch fest installiert bleiben.

Statt eines Kalibrier-Reflektors 7 (ob nun temporär oder fest installiert) kann auch ein bekanntes und präzise vermessenes Kalibierobjekt, z.B. ein Kalibrierrohr mit bekannten Abmaßen, d.h. insbesondere bekannter Referenzdicke und/oder Schichtdicke, z.B. aus Kunststoff oder z.B. Keramik, zwischen die Messpositionen bzw. bei der Ausbildung mit zwei THz-Sensoren zwischen die beiden THZ-Sensoren 1, 2 eingebracht werden, so dass dann von beiden Messpositionen MP1, MP2 jeweils eine Leerlauf-Teilzeit t0-1, t0-2 bis zu Grenzflächen des Kalibrierobjektes gemessen wird, und aus den so ermittelten Leerlauf-Teilzeiten t0-1, t0-2, der bekannten Lichtgeschwindigkeit c0 sowie der bekannten Referenzdicke nachfolgend die Leerlaufzeit t0 und vorzugsweise die Leerlaufstrecke s0 ermittelt werden. Dies wird weiter unten detaillierter beschrieben. Danach kann das Kalibrierobjekt entnommen werden.

Gemäß Figur 3 wird als Messobjekt 6 ein einwandiges Rohr aus Kunststoff oder Gummi durch den Messbereich 4 geführt, insbesondere mit seiner Transportachse B senkrecht zu der optischen Achse A. Die laterale Position des Messobjektes 6 ist hierbei hingegen im Allgemeinen nicht festgelegt, wobei das Messobjekt 6 oder auch die Messvorrrichtung 3 (ohne Verstellung der Sensoren 1,2 zueinander) lateral verstellt werden kann, um das Messobjekt 6 zu zentrieren.
Aus der Kalibrierung bzw. Leerlaufmessung der Figur 1, 2 sind somit bereits die Leerlaufzeit t0 und die Leerlaufstrecke s0 bekannt, die nachfolgend zur Berechnung bei den Vermessungen von Messobjekten 6 herangezogen werden.
In der Messanordnung gemäß Figur 3 wird nachfolgend somit das Messobjekt 6 entlang der Förderachse B durch die THz-Messvorrichtung 1 befördert und fortlaufend vermessen. Hierbei sendet in einem ersten Messschritt St4 wiederum der erste THz-Sensor 1 einen ersten THz-Sendestrahl 20-1 entlang der optischen Achse A in den Messbereich 4, d. h. im Wesentlichen in Richtung der Förderachse B, und detektiert erste THz- Reflexionsstrahlen 21-1.

Somit verläuft der erste THz-Sendestrahl 20-1 vom ersten THz-Sensor 1 durch einen ersten Außenraum (hier somit den linken Außenraum) sL1 bis zur Außenfläche 6a des Rohres 6, mit einer gemessenen ersten Außenlaufzeit tL1, dann tritt der erste THz-Sendestrahl 20-1 durch die Außenfläche 6a, sodass zu einem Zeitpunkt tL1 entsprechend ein erster Messpeak in dem ersten THz-Reflexionsstrahl 21-1 erzeugt wird,
woraufhin der erste THz-Sendestrahl 20-1 nachfolgend durch das Material der Rohrwandung 6d mit dem Berechnungsindex n6 tritt. Hierbei durchquert der erste THz-Sendestrahl 20-1 den ersten Wandbereich mit einer ersten Wanddicke sR1 und erzeugt nachfolgend nach einer ersten inneren Laufzeit tR1 beim Durchtritt durch die Innenfläche 6b des Rohres 6 wiederum einen Reflexionspeak;
dann läuft der erste THz-Sendestrahl 20-1 durch den Innenraum 6c des Rohrs 6, d.h. durch den Innendurchmesser sL2, bis er wieder auf die Innenfläche 6a gelangt, wobei eine erste Innenlaufzeit tL2-1 gemessen wird.

Somit werden in diesem ersten Messschritt die Laufzeiten tL1, tR1, tL2-1 gemessen; der Brechungsindex n6 ist jedoch noch unbekannt, so dass auch die erste innere Laufzeit tR1 zunächst nicht direkt als erste Wanddicke sR1 umgerechnet werden kann.

Entsprechend wird in einem zweiten Messschritt St5 der zweite THz-Sendestrahl 20-2 von dem zweiten THz-Sensor 2 in den Messbereich 4 ausgegeben, wobei er nach Durchqueren des zweiten (rechten) Außenraums sL3 einen Messpeak ausgibt und in die Außenfläche 6a des Rohres 6 eintritt und wiederum nach Durchqueren des zweiten (rechten) Wandbereichs des Rohres 6 mit einer zweiten Wanddicke sR2 beim Auftreffen auf die Innenfläche 6b einen Messpeak als Teil-Reflexion erzeugt, der in dem zweiten THz-Reflexionsstrahl 20-2 als Messsignal detektiert wird. Auch hier kann die zweite Wandlaufzeit tR2 wiederum aufgrund des unbekannten Brechungsindex n6 nicht direkt als zweite Wanddicke sR2 umgerechnet werden. Nachfolgend tritt auch der zweite THz-Sendestrahl 20-1 in den Innenraum 6c, d. h. durch eine erste Wanddicke R1 mit der Laufzeit tR1 des Rohres 6 und gibt somit nach Durchqueren des Innendurchmessers L2 nach der zweiten Innenlaufzeit tL2-2 einen Messpeak aus.

In Figur 3 sind die so ermittelten Laufzeiten dargestellt, d. h. das erste Messsignal SS1 enthält die Laufzeiten tL1, tR1 und tL2-1, und entsprechend das zweite Messsignal SS2 die Laufzeiten t-L3, tR2 und tL2-2. Diese Messsingale SS1 und SS2 werden von einer Steuer-und Auswerteeinrichtung 100 aufgenommen, die z.B. in einem internen oder externen Speicher 101 die Kalibrierwerte speichern kann.

Somit werden hier vorteilhafterweise von beiden THz-Sensoren 1, 2 die Innenlaufzeiten tL2-1, tL2-2 ermittelt, die bei korrekter Messung gleich sein sollten; dies kann zur Validierung des Messergebnisses herangezogen werden. Bei Abweichungen aufgrund der Messungenauigkeit kann hierzu nachfolgend vorzugsweise der Mittelwert als Innenlaufzeit tL2 herangezogen werden. Es reicht jedoch grundsätzlich, wenn die Innenlaufzeit nur von einer Seite bestimmt wird.

Nachfolgend wird in Schritt St6 nunmehr die Gesamtlaufzeit tges_R ermittelt gemäß Gleichung GL1: $tges_R = tL 1 + tR 1 + tL 2 + tR 2 + tL 3$ (GL 1).

Eine Material-Laufzeitdifferenz Δt zur Leerlaufzeit t0 beträgt: $Δt = tges_R - t 0$ Gleichung GL2.

Nachfolgend kann somit eine Gleichung angesetzt werden, bei der die Gesamtlaufzeit tges_R nach Gleichung GL1 mit dem zu vermessenden Rohr 6 mit äquivalenten Laufzeiten ausgedrückt werden kann, d. h. einer ersten (linken) äquivalenten Laufzeit tRLA1, und entsprechend einer zweiten äquivalenten Laufzeit tRLA2,
wobei diese äquivalenten Laufzeiten in einer reinen Luftstrecke entsprechen, zuzüglich der Laufzeitdifferenz Δt: $tges_R = tL 1 + tRLA 1 + tL 2 + tRLA 2 + tL 3 + Δt$ Gleichung GL3.

Diese Gesamt-Laufzeit tges_R der Gleichung GL3 kann nunmehr gleichgesetzt werden mit dem entsprechenden Wert der Gesamt-Laufzeit tges-R aus Gleichung GL1: $tL 1 + tR 1 + tL 2 + tR 2 + tL 3 = tL 1 + tRLA 1 + tL 2 + tRLA 2 + tL 3 + Δt$ Gleichung GL4. daraus folgt nach Kürzen gleicher Summanden tL1, tL2, tL3, die letztlich in der Kalibriermessung und den Messschritten jeweils in Luft erfolgen und somit gleich sind, $tR 1 + tR 2 = tRLA 1 + tRLA 2 + Δt$ Gleichung GL4a

Ein Umstellen nach tRLA1 + tRLA2 ergibt Gleichung GL4b: $tRLA 1 + tRLA 2 = tR 1 + tR 2 - Δt$ und somit zusammengefasst nach der äquivalenten Gesamt-Luftlaufzeit tRLA1,2 im Rohrwandungsbereich, die die Summe der beiden äquivalenten Laufzeiten darstellt, d.h. mit tRLA1,2 = tRLA1 + tRLA2: $tRLA 1,2 = tR 1 + tR 2 - Δt$ Gleichung GL5

Die äquivalente Gesamt-Luftlaufzeit tRLA1, 2 entspricht somit der Laufzeit des THz-Sendestrahls 20-1 (oder auch 20-2) im gesamten Rohrwandungsbereich 6d bzw. als Summe der beiden Rohrwandungen, wenn diese den gleichen Brechungsindex n0 = 1 bzw. die gleiche Lichtgeschwindigkeit c0 hätten wie das umgebende Medium, d. h. Luft.

Der Quotient aus Gleichung GL5 und der Leerlaufzeit t0 bildet den äquivalenten Streckenanteil XL, aus dem mit der Referenzstrecke s0 dann die äquivalente Strecke sLA berechnet werden kann, den der gesamte Rohrwandungsbereich 6d bzw. die beiden Rohrwandungen zusammen beanspruchen. $xL = tRLA 1,2 / t 0$ Gleichung GL6 $sLA = xL * s 0$ Gleichung GL7

Über die Verteilung der Laufzeiten berechnen sich aus der Gesamtstrecke bzw. kumulierten Strecke der erste und zweite Wanddicken-Anteil xR1 und xR2: $\begin{matrix}xR 1 = tR 1 / \left(tR1+tR2\right) und \\ xR 2 = tR 2 / \left(tR1+tR2\right)\end{matrix}$ Gleichung GL8 und darüber als Ergebnisschritt St 7 die absoluten Werte für die Wanddicken sRi $\begin{matrix}sR 1 = xR 1 * sLA und \\ sR 2 = xR 2 * sLA\end{matrix}$ Gleichung GL9

Entsprechend kann für Schritt St7 auch eine Gesamtgleichung GL10 ermittelt werden aus: $\begin{matrix}sR 1 = tR 1 * c 0 * \left(t0-tL1-tL2-tL3\right) / \left(tR1+tR2\right) und \\ sR 2 = tR 2 * c 0 * \left(t0-tL1-tL2-tL3\right) / \left(tR1+tR2\right)\end{matrix}$ Gleichung G10L , die direkt eine Ermittlung aus den Messwerten ohne die oben genannten Zwischenschritte beschreibt.

Somit sind erfindungsgemäß Ermittlungen der Wanddicken sR1, SR2 des Rohres 6 ohne Kenntnis des Brechungsindex n6 möglich.

Aus den Innenlaufzeiten tR1 und tR2 und dem so ermittelten Wanddicken bzw. Wanddicken-Berechnungswerten SR1 und SR2 kann entsprechend nachfolgend in einem Schritt St8 die Lichtgeschwindigkeit C6 im Rohrmaterial und somit auch der gemittelte Brechungsindex n6 ermittelt werden als: $n 6 = c 0 / c 6 = c 0 * \left(\left(tR1+tR2\right)/\left(sR1+sR2\right)\right)$ Gl11 und entsprechend der erste und zweite Brechungsindex n6-1 und n6-2 der ersten und zweiten Wanddicke sR1, sR2, wenn diese getrennt betrachtet werden sollen, als $n 6 - 1 = c 0 / c 6 - 1 = c 0 * \left(tR1/sR1\right)$ Gl11a $n 6 - 2 = c 0 / c 6 - 2 = c 0 * \left(tR2/sR2\right)$ Gl11a

Bei der Ausführungsform mit einem Kalibrierrohr können bei der oben beschriebenen Kalibrierung entsprechende Formeln für die Kalbriermessung angesetzt werden: so kann z.B. bei einem Außendurchmesser OD_Messrohr des Kalibrierrohres angesetzt werden: ${s}_{0} = {OD}_{Messrohr} + {c}_{0} \left({t}_{L 1}+{t}_{L 2}\right)$ Gl 12 ${s}_{0} = {c}_{0} \left({t}_{L 1}+{t}_{L 2}+{t}_{L 3}\right) + {c}_{R} \left({t}_{R 1}+{t}_{R 2}\right)$ Gl 13 bzw. die Leerlaufzeit t₀ als: ${t}_{0} = {s}_{0} / {c}_{0} mit obigen {s}_{0} - FormeIn$ Gl 14

Nachfolgend eine Beispielberechnung mit Messwerten bei Vermessung eines Rohres 6 aus Polyethylen gemäß der Ausführungsform:

### Vorauslegung der Messwerte

| | | |
|---|---|---|
| c0 | 299792458 | [m/s] |
| s0 | 1 | [m] |
| t0 | 3,33564E-09 | [s] |
| n6 | 1,59 | [-] |

| | Wanddicken Abstände | **t_{i Luft} [s]** | **t_{i Rohr} [s]** | |
|---|---|---|---|---|
| sL1 | 0,200 | 6,67128E-10 | 6,67128E-10 | |
| sR1 | 0,061 | 2,03474E-10 | 3,23524E-10 | |
| sL2 | 0,390 | 1,3009E-09 | 1,3009E-09 | |
| sR2 | 0,049 | 1,63446E-10 | 2,5988E-10 | |
| sL3 | 0,300 | 1,00069E-09 | 1,00069E-09 | |
| Summe | | 3,33564E-09 | 3,55212E-09 | |

| | | |
|---|---|---|
| Δt | 2,16483E-10 | [s] |
| t_{Rges} | 3,55212E-09 | [s] |

Rückrechnung - Auswertung über ausgewertete Laufzeitinformationen ti_Rohr, t0, s0:
Laufzeit im Rohranteil als wenn es Luft wäre (äquivalente Laufzeit im gesamten Rohrwandungsbereich 6d)

| | | |
|---|---|---|
| tRA1,2 | 3,66921E-10 | [s] |

Luftanteil bezogen auf die Laufzeit

| | | |
|---|---|---|
| xL | 0,110 | [-] |

Äquivalente Luftstrecke

| | | |
|---|---|---|
| sLA | 0,110 | [m] |

Rohranteilverhältnisse

| | | |
|---|---|---|
| X_{R1} | 0,554545455 | [-] |
| X_{R2} | 0,445454545 | [-] |

Rohrwanddicken

| | | |
|---|---|---|
| S_{R1} | 0,061 | [m] |
| S_{R2} | 0,049 | [m] |

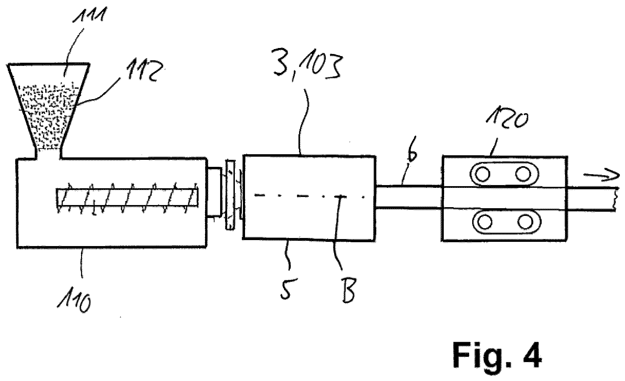

Fig. 4 zeigt eine Anordnung zur Herstellung und Vermessung eines Rohres 6 bzw. Rohrprofils mit einem Extruder 110, dem als Ausgangsstoff mindestens ein Granulat 111 zugeführt wird, einer Messvorrichtung 3 oder 103 und einer Fördereinrichtung 120 zum Fördern des Rohres 6 entlang der Förderachse B.

Hierbei kann das Granulat 111 unterschiedliche Komponenten enthalten, oder es können z.B. von mehreren Materialzuführungen, z.B. Förderschnecken, mehrere Ausgangsstoffe 111 zugeführt werden, die somit von dem Extruder gemeinsam verarbeitet werden.

Für sämtliche Ausführungsformen können weitere Ermittlungen erfolgen:
Da das Rohr 6 entlang seiner Förderachse B fortlaufend durch die THz-Messvorrichtung 3 gefördert wird, können diese Werte fortlaufend berechnet werden. Hierbei können Änderungen der Wanddicken erfasst werden, Änderungen der Außenabstände sL1, sL3 können zur Kompensation durch die Fördereinrichtung 120 herangezogen werden, d. h. das Rohr 6 nach links oder rechts verstellt werden, oder die Messvorrichtung 3 relativ zum Rohr 6 verstellt werden.
Insbesondere kann auch der Brechungsindex n6 als Funktion der Zeit, d. h. n6 (t) betrachtet werden und die zeitliche Konstanz des so ermittelten Brechungsindex n6 überprüft werden, ob diese innerhalb entsprechender Grenzwerte GW1, GW2 liegt, die der Messgenauigkeit und Berechnungsgenauigkeit entsprechen, um nachzuweisen, dass die Materialcharge sich nicht verändert hat und die Materialmischung homogen ist, was insbesondere bei einer Vermessung nach einer Extrusion mit verschiedenen Komponenten vorteilhaft ist.
Sollte bei Messwertaufnahme auf Grund sehr starker Deformationen und damit verbundener destruktiver Reflexion des Messsignals die saubere Auswertung der Laufzeit für den Innendurchmesser (vgl. tL2-1 und tL2-2 in Fig. 3 nicht möglich sein, können allein über die Laufzeiten tR1, tR2 innerhalb der Rohrwandungen mit dem zuletzt ermittelten Brechungsindex n6 die Wanddicke sR1, sR2 bestimmt werden. Hier wird davon ausgegangen, dass das Materialgefüge sich innerhalb kürzerer Zeitintervalle unveränderlich bleibt.

Sollten z.B. Materialanhäufungen nur an einer Wandung vorhanden sein, kann die Temperatur zwischen der linken und der rechten Wandung abweichen. Damit verändert sich als Materialspezifisches Verhalten der erste Brechungsindex n6-1 und/oder der zweite Brechungsindex n6-2. Dies kann als zusätzliche Information an den Anlagenbediener ausgegeben werden, da die Messung nicht eindeutig valide sein kann. Alle gängigen Verfahren gehen bisher vereinfachter Weise davon aus, dass der Brechungsindex innerhalb eines Querschnitts aus einem homogenen Material konstant ist.

Es ist eine Ausbildung vorgesehen mit
Mindestens zwei bzw. mehreren Sensoren, insbesondere einer n-fachen Anordnung von Sensoren, insbesondere zur 100%-Abdeckung des Umfangs bzw. der Außenfläche 6a des Rohres 6, wobei zwei sich näherungsweise gegenüberliegende Sensoren zur Auswertung herangezogen werden. Hierzu kann dann z.B. eine rechnerische vektorielle Anpassung der Messwerte bezogen auf eine Achse erfolgen. Hierbei werden die Sensoren in Abhängigkeit ihres von 180° abweichenden Neigungswinkels zunehmend abweichende Messwerte für die Laufzeit t_{L2_1/2} ermitteln, da sich auf Grund der geometrischen Randbedingungen am Rohr die Laufzeit, respektive der Innendurchmesser variieren können. Dies kann als Abgleich für die Validität dieser Messung dienen.

Weiterhin ist möglich eine Anordnung mit einer n-fachen Anordnung von zwei näherungsweise gegenüberliegenden Sensoren, wobei jeder Sensor selbst rotatorisch gelagert ist und aus den Messwerten die Mittenlage des Rohres per Winkelverstellung der Sensoren kompensiert wird. Hierbei ist besonders zu beachten, dass beide Sensoren in Abhängigkeit ihres von 180° abweichenden Neigungswinkels zunehmend abweichende Messwerte für die Laufzeit t_{L2_1/2} ermitteln können, da sich auf Grund der geometrischen Randbedingungen am Rohr die Laufzeit, respektive der Innendurchmesser variieren können. Dies kann als Abgleich für die Validität dieser Messung dienen.

Fig. 6 und 7 zeigen eine Ausführungsform mit Sensoren 1, 2, die in der gezeigten Messebene E, d.h. der Zeichenebene, schwenkbar sind. Die Messebene E liegt auf der Förderachse B der Fig. 3 senkrecht, wobei nachfolgend die Förderachse B dem Mittelpunkt M des Rohres 6 entspricht. Die Messebene E ist somit durch die gemeinsame optische Achse A und eine zweite Richtung, hier die vertikale Richtung V definiert.

Die Grundstellung der Sensoren 1, 2 ist wiederum die Ausrichtung auf der gemeinsamen optischen Achse A, wobei die Sensoren 1, 2 von dieser Grundstellung aus in der Messebene E jeweils um einen ersten Einstellwinkel α1 und entsprechend einen zweiten Einstellwinkel α2 schwenkbar sind.

Durch Ausrichtung der beiden Sensoren 1 und 2 in der Grundstellung, d.h. auf der gemeinsamen optischen Achse A entsprechend Fig. 3 kann wiederum wie in der ersten Ausführungsform der Figur 1, 2 in dem Kalibrierungsschritt die Leerlaufstrecke S0 gemessen werden.

Nachfolgend wird als Messobjekt das Rohr 6 eingebracht, das im Allgemeinen mit seinem Mittelpunkt M nicht auf der gemeinsamen optischen Achse A liegt.

In einem Ausrichtungsschritt werden die Sensoren in ihren Messpositionen MP1 und MP2 geschwenkt, so dass ihre optischen Achsen A1 und A2 senkrecht auf der Außenfläche 6a des Rohres 6 liegen. Dies kann z.B. mittels des Verfahrens der DE 10 2015 122 105 A1 erfolgen, gemäß der die Sensoren 1 und 2 in beide Richtungen geschwenkt werden und Maximalwerte der Reflexionspeaks an der Außenfläche 6a auf die senkrechte Ausrichtung hinweisen.

Somit gilt gemäß dieser Darstellung allgemein zu den Abständen der Messpositionen MP1, MP2 und des Mittelpunktes M, mit
s0 als Leerlaufstrecke zwischen MP1 und MP2 sowie $x ′ = Strecke MP 1 - M , und y ′ = Strecke MP 2 - M$ $s 0 \neq x ′ + y ′$

Wenn mit x die Projektion von x'auf die optische Achse A, d.h. somit auf die Leerlaufstrecke s0, und entsprechend
mit y die Projektion von y' auf die optische Achse A bezeichnet wird, so kann ermittelt werden: $x = x ′ * sinα 1 und y = y ′ * sinα 2$ Gleichung Gl15

Hierbei sind grundsätzlich die Wandstrecken sR1 und sR2 gegenüber Fig. 3 unverändert, da die Sensoren 1 und 2 auf die Außenfläche des Rohrs 6 senkrecht ausgerichtet worden sind. Auch können grundsätzlich bereits die halben Innenstrecken (sL2-1)/2 und (sL2-2)/2, deren doppelter Wert von den Sensoren 1 und 2 direkt gemessen wird, bei einem idealen runden Rohr 6 als zutreffend herangezogen werden.

Hingegen sind die in Fig. 7 eingezeichneten Außenstrecken sL1 und sL3 nicht direkt messbar, aber sie können aus den gemessenen Außenlaufzeiten bzw. bei Multiplikation mit der Lichtgeschwindigkeit den entsprechenden Messwerten (sL1)' bzw. (sL3)' der Fig. 7 und den Einstellwinkeln α1 und α2 ermittelt werden als $sL 1 = \left(sL1\right) ′ * sinα 1 und sL 3 = \left(sL3\right) ′ * sinα 2$ Gleichung Gl16

Somit kann hiermit bereits eine Berechnung entsprechend der Ausführungsform der Fig. 3 erfolgen, d.h. mit den Gleichungen 1 bis 11a, da die Werte von sL1, sR1, sR2, sL3 so bereits ermittelt werden können, wobei als Innendurchmesser vorzugsweise der Wert (sL2-1)/2 + (sL2-2)/2, d.h. die Mittelung der ersten und zweiten Messung, herangezogen werden kann.

Eine genauere Berechnung berücksichtigt, dass insbesondere bei Ovalitäten eine andere Berechnung den Innendurchmesser besser ermittelt:
sL1 und sL3 werden mit Gleichung Gl16 berechnet.
Weiterhin setzen sich die Strecken x und y in Fig. 6 zusammen aus $\begin{matrix}x = sL 1 + sR 1 + \left(sL2-1\right) / 2 \\ y = sL 3 + sR 2 + \left(sL2-2\right) / 2\end{matrix}$ Gleichung GL17
Weiterhin wird angesetzt $\begin{matrix}x ′ = x + Δx \\ y ′ = y + Δy\end{matrix}$ Gleichung Gl18

Hierbei können x' und y' berechnet werden mittels des Sinussatzes aus der gemessenen Leerlaufstrecke s0 und den Einstellwinkeln α1 und α2, da diese drei Werte in Fig. 6 das Dreieck MP1, MP2, M eindeutig festlegen.

Aus Gl 17 und Gl 18 ergibt sich $\begin{matrix}x ′ = sL 1 + sR 1 + \left(sL2-1\right) / 2 + Δx \\ y ′ = sL 3 + sR 2 + \left(sL2-2\right) / 2 + Δy\end{matrix}$ Gleichung 19

Daraus können somit Δx und Δy berechnet werden.
Indem der Brechungsindex n bestimmt wird, kann somit bei einer Verarbeitung mehrerer Ausgangsstoffe 111 auch auf ein Verhältnis der Materialzusammensetzung der Ausgangsstoffe 111 geschlossen werden, sodass eine Regelung der Zusammensetzung durch Messung des Brechungsindex n und Ansteuerung der Materialzuführung 112 durchgeführt, ohne dass z.B. eine genaue Kenntnis der einzelnen Förderraten der Materialzuführung 112 erforderlich ist.

### Bezugszeichenliste

- 1: THz-Sensor
- 2: THz-Sensor
- 3: THz-Messvorrichtung
- 4: Messbereich, d. h. Bereich zwischen den THz-Sensoren 1, 2 bzw. dem ersten THz-Sensor 1 und dem Mess-Reflektor 102
- 5: Gehäuse
- 6: Messobjekt, Rohr
- 6a: Außenfläche
- 6b: Innenfläche
- 6c: Innenraum des Rohres 6
- 6d: Rohrwandung
- 7: Kalibrier-Reflektor, z. B. Präzisionsblech
- 11, 12: erste, zweite Kalibrierstrahlung

- 20-1: erster THz-Sendestrahl
- 20-2: zweiter THz-Sendestrahl
- 21-1: erster THz-Reflexionsstrahl
- 21-2: zweiter THz-Reflexionsstrahl
- 100: Steuer- und Auswerteeinrichtung
- 101: Speicher für Kalibierwerte
- 111: Ausgangsstoff, z.B. Granulat
- 112: Materialzuführung, z.B. Trichter oder ein oder mehrere Förderschnecken

- A: optische Achse
- B: Förderachse
- c0: Lichtgeschwindigkeit in Luft/Vakuum
- c6: materialspezifische Licht-Geschwindigkeit
- M: Mittelpunkt
- MP1: Messposition 1
- MP2: Messposition 2
- n6: Brechungsindex des Materials der Rohrwandung
- SS1: erstes Messsignal
- SS2: zweites Messsignal

- t0: Leerlaufzeit
- s0: Leerlaufstrecke
- t0-1, t0-2: Leerlauf-Teilzeiten in Fig. 2
- tR1: erste Außenlaufzeit (wird gemessen)
- tL1: erste Wandlaufzeit (wird gemessen)
- sL1: erste Wanddicke (wird berechnet)
- tL2-1: erste Innenlaufzeit durch den Innenraum 6c (wird gemessen) tL2-2 zweite Innenlaufzeit durch den Innenraum 6c (wird gemessen)
- tL2: Innenlaufzeit (gemittelter gemessener Wert) durch den Innenraum 6c
- tL3: zweite Außenlaufzeit vom zweiten Sensor 2 zur rechten Außenfläche 6a (wird gemessen)
- tR2: zweite Wandlaufzeit, hier durch den rechten Rohr-Wandbereich (wird gemessen)
- tges_R: Gesamtlaufzeit, d.h. Summe der Laufzeiten der THZ-Strahlung über die Strecke s0 bei einer Messung mit dem Messobjekt 6
- Δt: Material-Laufzeitdifferenz bzw. materialspezifische Laufzeitdifferenz
- tRLA1: erste (linke) äquivalente Laufzeit, die die theoretische Laufzeit der Strahlung durch den ersten Wandbereich (erste Wanddicke sR1) in dem Medium Luft bzw. umgebenden Medium beschreibt
- tRLA2: zweite (rechte) äquivalente Laufzeit, die die theoretische Laufzeit der Strahlung durch den zweiten Wandbereich (zweite Wanddicke sR2) in dem Medium Luft bzw. umgebenden Medium beschreibt
- tRLA1,2: äquivalente Gesamt-Luftlaufzeit im Rohrwandungsbereich, d.h. die theoretische Laufzeit der Strahlung durch beide Wandbereiche in dem Medium Luft bzw. umgebenden Medium

## Patentansprüche

1. THz-Messverfahren zum Vermessen eines Messobjektes (6), zum Beispiel eines Rohres aus einem Kunststoff oder Gummi,
mit mindestens folgenden Schritten:
- Vorbereitungsschritt (St1), Bereitstellen einer eine ungerade Anzahl von um das rohrförmige Messobjekte (6) angeordneten THz-Sensoren aufweisenden THz-Sensoranordnung (1, 2) mit zwei näherungsweise gegenüber liegenden THz-Sensoren (1, 2) zum Aussenden von THz- Sendestrahlen (20-1, 20-2) und Empfangen von Reflexionsstrahlung (21-1, 21-2)) von mindestens einer ersten Messposition (MP1) eines Messbereichs (4) mit dem ersten THz-Sensor (1) und von einer zweiten Messposition (MP2) des Messbereichs (4) mit dem zweiten THz-Sensor (2),
wobei die Messpositionen (MP1, MP2) durch eine Leerlaufstrecke (s0) getrennt sind,
- Kalibrierungsschritt (St2), Messen einer Leerlaufzeit (t0) mindestens eines THz-Sendestrahls (11, 12) durch die Leerlaufstrecke (s0) ohne das Messobjekt (6) und Ermittlung der Leerlaufstrecke (s0),
- Positionieren eines Messobjektes (6) in dem Messbereich (4) zwischen der ersten Messposition (MP1) und der zweiten Messposition (MP2) (St3),
- Durchführen einer ersten THz-Messung mit dem ersten THz-Sensor (1) von der ersten Messposition (MP1) aus mit einem THz-Sendestrahl (20-1) entlang einer ersten optischen Achse (A1, A) unter Messung einer ersten Außenlaufzeit (tL1) bis zu einer Außenfläche (6a) des Messobjektes (6), einer ersten Wand-Laufzeit (tR1) durch einen ersten Wandbereich des Messobjektes (6) und einer Innenlaufzeit (tL2, tL2_1) durch einen Innenraum (6c) des Messobjektes, (St4),
- Durchführen einer zweiten THz-Messung mit dem zweiten THz-Sensor (2) von der zweiten Messposition (MP1) aus entlang einer zweiten optischen Achse (A2, A) unter Messung einer zweiten Außenlaufzeit (tL3) zwischen der zweiten Messposition (MP2) und der Außenfläche (6a) des Messobjektes (6) und einer zweiten Wand-Laufzeit (tR2) durch einen dem zweiten THz-Sensor (2) zugewandten zweiten Wandbereich des Messobjektes (6) (St5)
- Ermittlung einer Gesamtlaufzeit (tges_R) durch den Messbereich (4) mit dem Messobjekt (St6) aus den gemessenen Wand-Laufzeiten (tR1. tR2), der gemessenen Innenlaufzeit (tL2, tL2_1) und den gemessenen Außenlaufzeiten (tL1, tL3), und
- Ermittlung einer ersten Wanddicke (sR1) des ersten Wandbereichs und einer zweiten Wanddicke (sR2) des zweiten Wandbereichs aus den gemessenen Wand-Laufzeiten (tR1. tR2), der gemessenen Innenlaufzeit (tL2, tL2_1) und den gemessenen Außenlaufzeiten (tL1, tL3) und eventuell auch der ermittelten Gesamtlaufzeit (tges_R) (St7),
wobei der von der ersten Mess-Position ausgesandte erste THz-Sendestrahl (20-1) und der von der näherungsweise gegenüber liegenden zweiten Mess-Position ausgesandte zweite THz- Sendestrahl (20-2) zeitlich getrennt und/oder in anderen Frequenzbereichen und/oder in unterschiedlicher Polarität ausgesandt werden,
zur Vermeidung gegenseitiger Beeinflussung der beiden THz-Sendestrahlen (20-1, 20-2) der zwei näherungsweise gegenüberliegenden THz-Sensoren (1, 2).

2. Verfahren nach Anspruch 1, **dadurch gekennzeichnet, dass** die Ermittlung der Wanddicken (sR1, sR2) ohne Heranziehen eines materialspezifischen Wertes des Messobjektes (6), insbesondere ohne einen Brechungsindex (n6) oder eine materialspezifische Licht- Geschwindigkeit (c6), erfolgt.

3. Verfahren nach einem der vorherigen Ansprüche, **dadurch gekennzeichnet, dass** nachfolgend aus der Ermittlung der Wanddicken (sR1, sR2) und der Wand-Laufzeiten (tR1, tR2) ein materialspezifischer optischer Wert des Materials des Messobjektes (6), insbesondere ein Brechungsindex (n6) des Messobjektes (6) ermittelt wird (St8).

4. Verfahren nach einem der vorherigen Ansprüche, **dadurch gekennzeichnet, dass** die THz-Sensoranordnung die zwei um den Messbereich (4) herum an den Mess-Positionen (MP1, MP2) angeordnete THz-Sensoren (1, 2; 1, 102), insbesondere statisch angeordnete THz-Sensoren (1, 2; 1, 102) aufweist, die die mindestens zwei THz-Sendestrahlen (20-1. 20-2) ausgeben und die mindestens zwei THz-Messungen durchführen,
wobei die beiden THZ-Sensoren (1, 2) schwenkbar sind und in einer Grundstellung auf einer gemeinsamen optischen Achse (A) liegen und aus dieser Grundstellung heraus jeweils verstellt werden unter Ausbildung eines Einstellwinkels zwischen ihren optischen Achsen (1, 2),
wobei die THZ-Sensoren (1, 2) nach dem Kalibrierungsschritt und/oder vor einigen der THZ-Messungen von der Grundstellung weg geschwenkt werden.

5. Verfahren nach einem der vorherigen Ansprüche, **dadurch gekennzeichnet, dass** eine rechnerische vektorielle Anpassung der Messwerte der beiden näherungsweise gegenüberliegend Sensoren, bezogen auf die Achse eines der beiden Sensoren erfolgt.

6. Verfahren nach einem der vorherigen Ansprüche, **dadurch gekennzeichnet, dass** eine 100%-Abdeckung des Umfangs oder der Außenfläche (6a) des Rohres (6) durch die beiden näherungsweise gegenüberliegende Sensoren erfolgt.

7. Verfahren nach einem der vorherigen Ansprüche, **dadurch gekennzeichnet, dass** die Ermittlung der Gesamt-Laufzeit (tges-R) durch den Messbereich (4) erfolgt über eine Summation der ersten und zweiten Außen-Laufzeit (tL1, tL3), der beiden Wand-Laufzeiten (tR1, tR2) und einer Innen-Laufzeit (tL2, tL2-1, tL2-2).

8. Verfahren nach einem der vorherigen Ansprüche, **dadurch gekennzeichnet, dass** die erste und/oder zweite Wanddicke (sR1, sR2) ermittelt wird aus der folgenden Formel: $\begin{matrix}sR 1 = tR 1 * c 0 * \left(t0-tL1-tL2-tL3\right) / \left(tR1+tR2\right) und \\ sR 2 = tR 2 * c 0 * \left(t0-tL1-tL2-tL3\right) / \left(tR1+tR2\right)\end{matrix}$ (GL10) mit folgenden Größen:
sR1: erste Wanddicke
sR2: zweite Wanddicke
tR1: erste Wandlaufzeit,
tR2: zweite Wandlaufzeit,
c0: Lichtgeschwindigkeit im Vakuum oder Gas des Messbereichs (4),
t0: Leerlaufzeit des Kalibrierungsschritts,
tL1: erste Außenlaufzeit,
tL3: zweite Außenlaufzeit,
tL2: Innenlaufzeit,

9. Verfahren nach einem der vorherigen Ansprüche, **dadurch gekennzeichnet, dass** das Messobjekt (6) fortlaufend durch den Messbereich (4) befördert wird, insbesondere senkrecht zu der optischen Achse (A), und fortlaufend die Wanddicken (sR1, sR2) ermittelt werden, vorzugsweise auch die Brechungsindizes (n6) des Messobjektes (6).

10. Verfahren nach Anspruch 9, **dadurch gekennzeichnet, dass** die Wanddicken (sR1, sR2) fortlaufend zeitlich aufgenommen und miteinander verglichen werden, insbesondere zur Ermittlung von zeitlichen Änderungen der Wanddicken und/oder einer zeitlichen Änderung des Materialgefüges aus einer zeitlichen Änderung des Brechungsindex (n6).

11. Verfahren nach einem der vorherigen Ansprüche, **dadurch gekennzeichnet, dass**
bei Feststellen, dass aus den Messsignalen (SS1, SS2) Reflektionen an der Innenfläche (6b) zur Messung der Wand-Laufzeiten (tR1, tR2) und/oder der Innenlaufzeit (tl2) nicht oder nicht genau ermittelt werden, auf eine destruktive Reflektion des THz-Sendestrahls (20-1, 20-2) geschlossen wird und aus der Gesamt-Laufzeit (tR1, tR2) innerhalb der Rohrwandungen mit dem zuletzt ermittelten Brechungsindex (n6) die Wanddicken (sR1, sR2) bestimmt werden.

12. Verfahren nach einem der vorherigen Ansprüche, **dadurch gekennzeichnet, dass** der mindestens eine THz-Sendestrahl (11, 12; 20-1, 20-2) als Terahertz-Strahlung, Mikrowellenstrahlung oder Radarstrahlung, insbesondere in einem Frequenzbereich von 5 GHz bis 50 THz, insbesondere 10 GHz bis 5 THz, ausgegeben wird, z. B. mit direkter Laufzeitmessung, Frequenzmodulation und/oder gepulster Strahlung.

13. THz-Messvorrichtung (3) zum Vermessen eines Messobjektes (6), z. B. eines Rohres aus Kunststoff oder Gummi, die mindestens aufweist:
eine eine ungerade Anzahl von um das rohrförmige Messobjekte (6) angeordneten THz-Sensoren aufweisenden THz-Sensoranordnung (1, 2; 1) mit zwei näherungsweise gegenüberliegenden THz-Sensoren (1, 2), die eingerichtet sind zur Durchführung mindestens
- einer ersten THz-Messung an einer ersten Messposition (MP1) mittels Aussenden eines ersten THz- Sendestrahls (20-1) und Empfangen erster Reflexionsstrahlung (21-1) durch den ersten THz-Sensor (1) und
- einer zweiten THz-Messung an einer zweiten Mess-Position (MP2) mittels Aussenden eines zweiten THz-Sendestrahls (20-1) und Empfangen zweiter Reflexionsstrahlung (21-1) durch den zweien THz-Sensor (2),
- wobei die erste und zweite Messposition (MP1, MP2) durch eine Leerlaufstrecke (s0) getrennt sind,
- einer Steuer- und Auswerteeinrichtung (100) zum Ansteuern der Sensoranordnung (1, 2) und Aufnehmen der Messsignale (SS1, SS2) der Sensoranordnung, wobei die Steuer- und Auswerteeinrichtung (100) ausgebildet ist, aus den Messsignalen (SS1, SS2)
- eine in einer Kalibrierung gemessene Leerlaufzeit (t0), eine erste und zweite Außenlaufzeit (tL1, tL3) zwischen den Messpositionen und einer Außenfläche eines Messobjektes (6), eine erste Wand-Laufzeit (tR1) des ersten THz-Sendestrahls (20-1) in einem dem ersten THz-Sensor (1) zugewandten ersten Wandbreich des Messobjektes (6), eine zweite Wand-Laufzeit (tR2) des zweiten THz-Sendestrahls (20-2) in einem dem zweiten THz-Sensor (2) zugewandten zweiten Wandbreich des Messobjektes (6), und eine Innenlaufzeit (tL2, t2-1, tl2-2) in einem Innenraum (6c) des Messobjektes (6) zu ermitteln, und
- aus den ermittelten Laufzeiten (t0, tL1, tL3, tL2, t2-1, tl2-2, tR1, tR2) und der Lichtgeschwindigkeit (c0) im leeren Messbereich (4) eine erste Wanddicke (SR1) des ersten Wandbereichs und eine zweite Wanddicke (SR2) des zweiten Wandbereichs des in den Messbereich (4) eingeführten Messobjektes (6) zu ermitteln,
wobei die Steuer- und Auswerteeinrichtung (100) ausgebildet ist,
den von der ersten Mess-Position ausgesandten ersten THz-Sendestrahl (20-1) und den von der gegenüber liegenden zweiten Mess-Position ausgesandten zweiten THz- Sendestrahl (20-2)
zeitlich getrennt und/oder in anderen Frequenzbereichen und/oder in unterschiedlicher Polarität auszusenden,
zur Vermeidung gegenseitiger Beeinflussung der beiden THz-Sendestrahlen (20-1, 20-2) der zwei gegenüberliegenden THz-Sensoren (1, 2).

14. THz-Messvorrichtung (3) nach Anspruch 13, **dadurch gekennzeichnet, dass** die THz-Sensoranordnung aufweist:
einen an der ersten Messposition (MP1) statisch angeordneten ersten THz-Sensor (1) zum Aussenden des ersten THz-Sendestrahls (20-1) entlang einer optischen Achse (A) in den Messbereich (4) und einen an der zweiten Messposition (MP2) statisch angeordneten zweiten THz-Sensor (2) zum Aussenden eines zweiten THz-Sendestrahls (20-2) entlang der optischen Achse (A) in den Messbereich (4).

15. THz-Messvorrichtung (34) nach Anspruch 13, **dadurch gekennzeichnet, dass** die THz-Sensoranordnung aufweist:
einen oder mehrere THz-Sensoren (1, 2) und eine Verstelleinrichtung, z.B. eine rotatorische Führung des mindestens einen THz-Sensors (1, 2) zum teilweise oder kontinuierlichen Umkreisen des Messbereichs (4) und zur Positionierung in mindestens die erste und zweite Mess-Position (MP1, MP2).

16. THz-Messvorrichtung (103) nach einem der Ansprüche 13 bis 15, **dadurch gekennzeichnet, dass** sie mehrere, um den Messbereich (4) herum angeordnete, statische oder rotierende THz- Sensoren (1, 2) aufweist, vorzugsweise unter Ausrichtung ihrer optischen Achsen (A) auf einen gemeinsamen Mittelpunkt, z. B. auf eine Förderachse (B).

17. THz-Messvorrichtung nach einem der Ansprüche 13 bis 16, **dadurch gekennzeichnet, dass** sie weiterhin eine Fördereinrichtung (120) zum kontinuierlichen Führen und/oder Transportieren des Messobjektes (6) durch den Messbereich (4), insbesondere entlang einer Förderachse (B) senkrecht zu der mindestens einen optischen Achse (A) aufweist.

18. Anordnung zur Herstellung eines Extrusionsprofils, insbesondere eines Rohrprofils (6) aus Kunststoff oder Gummi, mit
einem Extruder (110) zur Ausgabe eines Extrusionsprofil (6), mit mindestens einer Materialzuführung (112) , die eingerichtet ist, dass sie dem Extruder (110) mindestens einen Ausgangsstoff (111), z.B. als Granulat, Pulver oder Schredderware zuführt, und
einer THz-Messvorrichtung nach Anspruch 17 mit der Fördereinrichtung (120) zum Fördern des Extrusionsprofils als Messobjekt (6) durch den Messbereich (4), wobei die Steuer- und Auswerteeinrichtung (100) ausgelegt ist, zeitliche Änderungen in einer Materialzusammensetzung und/oder Materialverteilung des Rohrprofils (6) zu ermitteln und ein Anzeigesignal und/oder Steuersignal zur Ansteuerung des Extruders (110) und/oder seiner Materialzuführung (112) auszugeben.

19. Anordnung nach Anspruch 18, wobei die Materialzuführung (112) eingerichtet ist, dem Extruder (110) mehrere verschiedene Ausgangsstoffe (111) zuzuführen und die Steuer- und Auswerteeinrichtung (100) eingerichtet ist, aus einem aktuell ermittelten Brechungsindex des Extrusionsprofils eine aktuelle Materialzusammensetzung aus den Ausgangsstoffen (111) zu ermitteln.

## Claims

1. THz measuring method for measuring a measured object (6), for example, a pipe made of a plastics or rubber,
including at least the following steps:
- preparatory step (St1), providing a THz sensor arrangement (1, 2) comprising an odd number of THz sensors arranged around the tubular measurement object (6), with two approximately opposite THz sensors (1, 2) for emitting THz transmission beams (20-1, 20-2) and receiving reflected radiation (21-1, 21-2) from at least one first measuring position (MP1) of a measuring region (4) using the first THz sensor (1) and from a second measuring position (MP2) of the measuring region (4) using the second THz sensor (2),
the measuring positions (MP1, MP2) being separated by an empty path (s0),
- calibrating step (St2), measuring of an empty time of flight (t0) of at least one THz transmission beam (11, 12) through the empty path (s0) without the measured object (6) and determining the empty path (s0) distance,
- positioning a measured object (6) inside the measuring region (4) between the first measuring position (MP1) and the second measuring position (MP2) (St3),
- carrying out a first THz measurement by means of the first THz sensor (1) from the first measuring position (MP1) using a THz transmission beam (20-1) along a first optical axis (A1, A) while measuring a first exterior time of flight (tL1) up to an exterior surface (6a) of the measured object (6), a first wall time of flight (tR1) through a first wall region of the measured object (6) and an interior time of flight (tL2, tL2_1) through an interior space (6c) of the measured object, (St4),
- carrying out a second THz measurement by means of the second THz sensor (2) from the second measuring position (MP1) along a second optical axis (A2, A) while measuring a second exterior time of flight (tL3) between the second measuring position (MP2) and the exterior surface (6a) of the measured object (6) and a second wall time of flight (tR2) through a second wall region of the measured object (6) facing the second THz sensor (2) (St5)
- determining a total time of flight (tges_R) through the measuring region (4) with the measured object (St6) from the measured wall thicknesses (tR1. tR2), the measured interior time of flight (tL2, tL2_1) and the measured exterior times of flight (tL1, tL3), and
- determining a first wall thickness (sR1) of the first wall region and a second wall thickness (sR2) of the second wall region from the measured wall times of flight (tR1. tR2), the measured interior time of flight (tL2, tL2_1) and the measured exterior times of flight (tL1, tL3) and possibly even the determined total time of flight (tges_R) (St7),
where the first THz transmission beam (20-1) emitted from the first measuring position and the second THz transmission beam (20-2) emitted from the approximately opposite second measuring position are emitted at different times and/or in different frequency ranges and/or in different polarity,
so as to avoid mutual interference of the two THz transmission beams (20-1, 20-2) from the two approximately opposite THz sensors (1, 2).

2. Method according to claim 1, **characterized in that** the determination of the wall thicknesses (sR1, sR2) is carried out without using a material specific value of the measured object (6), in particular, without a refraction index (n6) or a material specific speed of light (c6).

3. Method according to one of the above claims, **characterized in that** subsequently, from the determination of the wall thicknesses (sR1, sR2) and the wall times of flight (tR1, tR2) a material specific optical value of the material of the measured object (6), in particular, a refraction index (n6) of the measured object (6) is determined (St8).

4. Method according to one of the above claims, **characterized in that** the THz sensor arrangement comprises the two THz sensors (1, 2; 1, 102) arranged around the measuring region (4) at the measuring positions (MP1, MP2), in particular, statically arranged THz sensors (1, 2; 1, 102), emitting the at least two THz transmission beams (20-1. 20-2) and carrying out the at least two THz measurements,
where the two THZ-sensors (1, 2) are provided pivotably and are lying, in an initial position, on a common optical axis (A) and being respectively adjusted from this initial position thereby producing an adjustment angle between their optical axes (1, 2),
where the THZ-sensors (1, 2) are pivoted away from the initial position subsequent to the calibrating step and/or prior to some of the THZ measurements.

5. Method according to one of the above claims, **characterized in that** a computational vector alignment of the measured values from the two sensors, which are approximately opposite one another, is carried out with respect to the axis of one of the two sensors.

6. Method according to one of the above claims**, characterized in that** the two approximately opposite sensors provide 100 per cent coverage of the circumference or the outer surface (6a) of the tube (6).

7. Method according to one of the above claims, **characterized in that** the determination of the total time of flight (tges-R) through the measuring region (4) is carried out via a summation of the first and second exterior times of flight (tL1, tL3), the two wall times of flight (tR1, tR2), and an interior time of flight (tL2, tL2-1, tL2-2).

8. Method according to one of the above claims, **characterized in that** the first and/or second wall thickness (sR1, sR2) are determined according to the following formula: $\begin{matrix}sR 1 = tR 1 * c 0 * \left(t0-tL1-tL2-tL3\right) / \left(tR1+tR2\right) and \\ sR 2 = tR 2 * c 0 * \left(t0-tL1-tL2-tL3\right) / \left(tR1+tR2\right)\end{matrix}$ (GL10) with the following variables:
sR1: first wall thickness
sR2: second wall thickness
tR1: first wall time of flight,
tR2: second wall time of flight,
c0: speed of light in a vacuum or gas of the measuring region (4),
t0: empty time of flight of the calibration step,
tL1: first exterior time of flight,
tL3: second exterior time of flight,
tL2: interior time of flight,

9. Method according to one of the above claims, **characterized in that** the measured object (6) is continuously transported through the measuring region (4), in particular, perpendicular to the optical axis (A), and the wall thicknesses (sR1, sR2) are continuously determined, preferably also to refraction indices (n6) of the measured object (6).

10. Method according to claim 9, **characterized in that** the wall thicknesses (sR1, sR2) are continuously temporally acquired and compared to one another, in particular, to determine temporal changes of the wall thicknesses and/or a temporal change of the material composition from a temporal change of the refraction index (n6).

11. Method according to one of the above claims, **characterized in that**
upon detecting that reflections at the interior surface (6b) for measuring the wall times of flight (tR1, tR2) and/or the interior time of flight (tl2) are not or not accurately determined from the measuring signals (SS1, SS2), a destructive reflection of the THz transmission beam (20-1, 20-2) is inferred, and
the wall thicknesses (sR1, sR2) are determined from the total time of flight (tR1, tR2) within the pipe walls with the last determined refraction index (n6).

12. Method according to one of the above claims, **characterized in that** the at least one THz transmission beam (11, 12 ; 20-1, 20-2) is emitted as terahertz radiation, microwave radiation or radar radiation,
in particular, in a frequency range between 5 GHz and 50 THz, in particular 10 GHz and 5 THz, , e.g. with direct time of flight measurement, frequency modulation and/or pulsed radiation.

13. THz measuring device (3, 103) for measuring a measured object (6), e.g. a pipe made of plastics or rubber, comprising at least:
a THz sensor arrangement (1, 2; 1) comprising an odd number of THz sensors arranged around the tubular measured object (6), with two approximately opposite THz sensors (1, 2), which are configured to carry out at least
- one first THz measurement at a first measuring position (MP1) by emitting a first THz transmission beam (20-1) and receiving first reflected radiation (21-1) by means of the first THz sensor (1), and
- one second THz measurement at a second measuring position (MP2) by emitting a second THz transmission beam (20-1) and receiving second reflected radiation (21-1) by means of the second THz sensor (2),
- the first and second measuring positions (MP1, MP2) being separated by an empty path (s0),
- a controller and evaluating device (100) for controlling the sensor arrangement (1, 2) and receiving at least one measuring signal (SS1, SS2) of the sensor arrangement, said controller and evaluating device (100) being configured to determine, from the measuring signals (SS1, SS2),
- an empty time of flight (t0) measured in a calibration, a first and second exterior time of flight (tL1, tL3) between the measuring positions and an exterior surface of a measured object (6), a first wall time of flight (tR1) of the first THz transmission beam (20-1) in a first wall region of the measured object (6) facing the first THz sensor (1), a second wall time of flight (tR2) of the second THz transmission beam (20-1) in a second wall region of the measured object (6) facing the second THz sensor (1), and an interior time of flight (tL2, t2-1, tl2-2) in an interior space (6c) of the measured object (6), and
- from the determined times of flight (t0, tL1, tL3, tL2, t2-1, tl2-2, tR1, tR2) and the speed of light (c0) in the empty measuring region (4), a first wall thickness (SR1) of the first wall region and a second wall thickness (SR2) of the second wall region of the measured object (6) introduced in the measuring region (4),
where the controller and evaluating device (100) is adapted to emit the first THz transmission beam (20-1) emitted from the first measuring position and the second THz transmission beam (20-2) emitted from the first measuring position
at different times and/or in different frequency ranges and/or in different polarity,
so as to avoid mutual interference of the two THz transmission beams (20-1, 20-2) from the two opposite THz sensors (1, 2).

14. THz measuring device (3, 103) according to claim 13, **characterized in that** the THz sensor arrangement comprises:
a first THz sensor (1) statically arranged at the first measuring position (MP1) for emitting the first THz transmission beams (20-1) along an optical axis (A) into the measuring region (4), and a second THz sensor (2) statically arranged at the second measuring position (MP2) for emitting the a second THz transmission beam (20-2) along the optical axis (A) into the measuring region (4).

15. THz measuring device (3, 103) according to claim 13, **characterized in that** the THz sensor arrangement comprises:
one or more THz sensors (1, 2) and an adjusting means, e.g., a rotational guide of the at least one THz sensor (1, 2) for partially or continuously circling the measuring region (4) and for positioning into at least the first and second measuring position (MP1, MP2).

16. THz measuring device (103) according to one of the claims 13 through 15, **characterized in that** it comprises a plurality of THz sensors (1, 2) arranged around the measuring region (4), statically or rotating, preferably with alignment of their optical axes (A) onto a common center point, e.g., onto a transport axis (B).

17. THz measuring device according to one of the claims 13 through 16, **characterized in that** it further comprises a conveyor device (120) for continuously guiding and/or transporting the measured object (6) through the measuring region (4), in particular, along a transport axis (B) perpendicular to the at least one optical axis (A).

18. Arrangement for manufacturing an extrusion profile, in particular, a pipe profile (6) made of plastics or rubber, including
an extruder (110) for putting out an extrusion profile (6), comprising at least one material feed (112), designed to feed at least one source material (111), e.g. as a granulate, powder or shredded goods, to the extruder (110), and
a THz measuring device according to claim 17 including the conveyor device (120) for conveying the extrusion profile as measured object (6) through the measuring region (4), the controller and evaluation device (100) being configured to determine temporal changes in a material composition and/or material distribution of the pipe profile (6) and to put out an indicator signal and/or control signal for controlling the extruder (110) and/or its material feed (112).

19. Arrangement according to claim 18, the material feed (112) being adapted to feed to the extruder (110) several different source materials (111), and the controller and evaluation device (100) being adapted to determine a current material composition of the source materials (111) from a currently determined refraction index of the extrusion profile.

## Revendications

1. Procédé de mesure THz pour l'examen d'un objet de mesure (6), par exemple d'un tuyau en plastique ou en caoutchouc,
comprenant au moins les étapes suivantes :
- Étape de préparation (St1), préparation d'un agencement de capteurs THz (1, 2) comportant un nombre impair de capteurs THz disposés autour de l'objet de mesure en forme de tuyau (6) avec deux capteurs THz (1, 2) approximativement l'un en face de l'autre pour émettre des faisceaux d'émission THz (20-1, 20-2) et réception d'un faisceau de réflexion (21-1, 21-2) d'au moins une première position de mesure (MP1) d'une zone de mesure (4) avec le premier capteur THz (1) et d'une seconde position de mesure (MP2) de la zone de mesure (4) avec le second capteur THz (2), les positions de mesure (MP1, MP2) étant séparées par une longueur de passage vide (s0),
- Étape d'étalonnage (St2), mesure d'un temps de passage ininterrompu (t0) d'au moins un faisceau d'émission THz (11, 12) à travers la longueur de passage vide (s0) sans objet de mesure (6) et détermination de la longueur de passage vide (s0),
- Positionnement d'un objet de mesure (6) dans la zone de mesure (4) entre la première position de mesure (MP1) et la seconde position de mesure (MP2) (St3),
- Réalisation d'une première mesure THz avec le premier capteur THz (1) depuis la première position de mesure (MP1) avec un faisceau d'émission THz (20-1) le long d'un premier axe optique (A1, A) en mesurant un premier temps de vol externe (tL1) jusqu'à une surface externe (6a) de l'objet de mesure (6), d'un premier temps de vol de paroi (tR1) à travers une première zone de paroi de l'objet de mesure (6) et d'un temps de vol interne (tL2, tL2_1) à travers un espace interne (6c) de l'objet de mesure (St4),
- Réalisation d'une seconde mesure THz avec le second capteur THz (2) depuis la seconde position de position (MP1) le long d'un second axe optique (A2, A) en mesurant un second temps de vol externe (tL3) entre la seconde position de mesure (MP2) et la surface externe (6a) de l'objet de mesure (6) et un second temps de vol de paroi (tR2) à travers une seconde zone de paroi de l'objet de mesure (6) tournée vers le second capteur THz (2) (St5),
- Détermination d'un temps de vol global (tges_R) à travers la zone de mesure (4) avec l'objet de mesure (St6) à partir des temps de vol de paroi mesurés (tR1, tR2), du temps de vol interne mesuré (tL2, tL2_1) et des temps de vol externes mesurés (tL1, tL3), et
- Détermination d'une première épaisseur de paroi (sR1) de la première zone de paroi et d'une seconde épaisseur de paroi (sR2) de la seconde zone de paroi à partir des temps de vol de paroi mesurés (tR1, tR2), du temps de vol interne mesuré (tL2, tL2_1) et des temps de vol externe mesurés (tL1, tL3) et éventuellement aussi du temps de vol global déterminé (tges_R) (St7),
- le premier faisceau d'émission THz (20-1) émis depuis la première position de mesure et le second faisceau d'émission THz (20-2) émis depuis la seconde position de mesure située approximativement en face étant émis chronologiquement séparés et/ou dans des zones de fréquences différentes et/ou en différentes polarités,
pour prévenir toute influence mutuelle des deux faisceaux d'émission THz (20-1, 20-2) des deux capteurs THz (1, 2) approximativement l'un en face de l'autre.

2. Procédé selon la revendication 1, **caractérisé en ce que** la détermination des épaisseurs de paroi (sR1, sR2) se fait sans faire appel à une valeur spécifique à un matériau de l'objet de mesure (6), en particulier sans indice de réfraction (n6) ni vitesse de la lumière spécifique au matériau (c6).

3. Procédé selon l'une des revendications précédentes, **caractérisé en ce qu'**après la détermination des épaisseurs de paroi (sR1, sR2) et des temps de vol de paroi (tR1, tR2), on détermine une valeur optique spécifique du matériau de l'objet de mesure (6), en particulier un indice de réfraction (n6) de l'objet de mesure (6) (St8).

4. Procédé selon l'une des revendications précédentes, **caractérisé en ce que** l'agencement de capteurs THz comporte les deux capteurs THz (1, 2 ; 1, 102) disposés autour de la zone de mesure (4) aux positions de mesure (MP1, MP2) en particulier des capteurs THz (1, 2 ; 1, 102) disposés de façon statique, qui émettent les au moins deux faisceaux d'émission THz (20-1, 20-2) et effectuent les au moins deux mesures THz.
où les deux capteurs THz (1, 2) sont inclinables, qui reposent sur un axe optique commun (A) dans une position de base et sont déplacés respectivement hors de cette position de base en formant un angle de réglage entre leurs axes optiques (1, 2),
les capteurs THz (1, 2) étant inclinés hors de la position de base après l'étape d'étalonnage et/ou avant quelques-unes des mesures THz.

5. Procédé selon l'une des revendications précédentes, **caractérisé par** une adaptation vectorielle informatique des valeurs de mesure des deux capteurs situés approximativement l'un en face de l'autre, rapportée à l'axe d'un des deux capteurs.

6. Procédé selon l'une des revendications précédentes, **caractérisé par** une couverture à 100 % du périmètre ou de la surface externe (6a) du tuyau (6) à travers les deux capteurs situés approximativement l'un en face de l'autre.

7. Procédé selon l'une des revendications précédentes, **caractérisé en ce que** la détermination du temps de vol global (tges-R) à travers la zone de mesure (4) se fait par sommation du premier et du second temps de vol externe (tL1, tL3), des deux temps de vol de paroi (tR1, tR2) et d'un temps de vol interne (tL2, tL2-1, tL2-2).

8. Procédé selon l'une des revendications précédentes, **caractérisé en ce que** la première et/ou la seconde épaisseur de paroi (sR1, sR2) sont déterminées à partir de la formule suivante : $\begin{matrix}R 1 = tR 1 * c 0 * \left(t0-tL1-tL2-tL3\right) / \left(tR1+tR2\right) et \\ sR 2 = tR 2 * c 0 * \left(t0-tL1-tL2-tL3\right) / \left(tR1+tR2\right)\end{matrix}$ (GL10) avec les grandeurs suivantes :
sR1 : première épaisseur de paroi
sR2 : seconde épaisseur de paroi
tR1 : premier temps de vol de paroi
tR2 : second temps de vol de paroi
c0 : vitesse de la lumière dans le vide ou dans le gaz de la zone de mesure (4),
t0 : temps de passage ininterrompu de l'étape d'étalonnage,
tL1 : premier temps de vol externe
tL3 : second temps de vol externe
tL2 : temps de vol interne.

9. Procédé selon l'une des revendications précédentes, **caractérisé en ce que** l'objet de mesure (6) est acheminé en continu à travers la zone de mesure (4), en particulier perpendiculairement à l'axe optique (A), et les épaisseurs de paroi (sR1, sR2) sont déterminées en continu, ainsi que de préférence aussi l'indice de réfraction (n6) de l'objet de mesure (6).

10. Procédé selon la revendication 9, **caractérisé en ce que** les épaisseurs de paroi (sR1, sR2) sont enregistrées et comparées entre elles en continu, en particulier pour déterminer des changements dans le temps des épaisseurs de paroi et/ou un changement dans le temps de la structure matérielle à partir d'un changement dans le temps de l'indice de réfraction (n6).

11. Procédé selon l'une des revendications précédentes, **caractérisé en ce que** lorsqu'on constate qu'à partir des signaux de mesure (SS1, SS2), on ne peut pas ou pas précisément identifier des réflexions sur la surface interne (6b) pour mesurer les temps de vol de paroi (tR1, tR2) et/ou le temps de vol interne (tl2), on en déduit une réflexion destructive du faisceau d'émission THz (20-1, 20-2) et on détermine les épaisseurs de paroi (sR1, sR2) à partir du temps de vol global (tR1, tR2) à l'intérieur des parois de tuyau avec l'indice de réfraction (n6) observé en dernier.

12. Procédé selon l'une des revendications précédentes, **caractérisé en ce que** l'au moins un faisceau d'émission THz (11, 12 ; 20-1, 20-2) est émis sous forme de rayonnement térahertz, radar ou micro-ondes, en particulier dans une gamme de fréquences entre 5 GHz et 50 THz, en particulier entre 10 GHz et 5 THz, p. ex. avec mesure directe de temps de parcours, modulation de fréquence et/ou rayonnement pulsé.

13. Procédé de mesure THz (3) pour l'examen d'un objet de mesure (6), par exemple d'un tuyau en plastique ou en caoutchouc, comportant au moins :
un agencement de capteurs THz (1, 2 ; 1) comportant un nombre impair de capteurs THz disposés autour de l'objet de mesure en forme de tuyau (6) avec deux capteurs THz (1, 2) approximativement l'un en face de l'autre, conçus pour effectuer au moins
- une première mesure THz à une première position de mesure (MP1) au moyen d'une émission d'un premier faisceau d'émission THz (20-1) et réception d'un premier faisceau de réflexion (21-1) par le premier capteur THz (1) et
- une seconde mesure THz à une seconde position de mesure (MP2) au moyen d'une émission d'un second faisceau d'émission THz (20-1) et réception d'un second faisceau de réflexion (21-1) par le second capteur THz (2),
- les première et seconde positions de mesure (MP1, MP2) étant séparées par une longueur de passage vide (s0),
- un dispositif de commande et d'exploitation (100) pour commander l'agencement de capteurs (1, 2) et enregistrer les signaux de mesure (SS1, SS2) de l'agencement de capteurs, le dispositif de commande et d'exploitation (100) étant conçu, à partir des signaux de mesure (SS1, SS2)
- déterminer un temps de passage ininterrompu (t0) mesuré au cours d'un étalonnage, un premier et un second temps de vol externes (tL1, tL3) entre les positions de mesure et une surface externe d'un objet de mesure (6), un premier temps de vol de paroi (tR1) du premier faisceau d'émission THz (20-1) dans une première zone de paroi de l'objet de mesure (6) tournée vers le premier capteur THz (1), un second temps de vol de paroi (tR2) du second faisceau d'émission THz (20-2) dans une seconde zone de paroi de l'objet de mesure (6) tournée vers le second capteur THz (2), et un temps de vol interne (tL2, t2-1, tl2-2) dans un espace interne (6c) de l'objet de mesure (6), et
- déterminer, à partir des temps de vol déterminés (t0, tL1, tL3, tL2, t2-1, tl2-2, tR1, tR2) et de la vitesse de la lumière (c0) dans la zone de mesure vide (4), une première épaisseur de paroi (SR1) de la première zone de paroi et une seconde épaisseur de paroi (SR2) de la seconde zone de paroi de l'objet de mesure (6) introduit dans la zone de mesure (4),
le dispositif de commande et d'exploitation (100) étant conçu pour émettre le premier faisceau d'émission THz (20-1) émis depuis la première position de mesure et le second faisceau d'émission THz (20-2) émis depuis la seconde position de mesure située en face chronologiquement séparés et/ou dans des zones de fréquences différentes et/ou en différentes polarités,
pour prévenir toute influence mutuelle des deux faisceaux d'émission THz (20-1, 20-2) des deux capteurs THz (1, 2) l'un en face de l'autre.

14. Dispositif de mesure THz (3) selon la revendication 13, **caractérisé en ce que** l'agencement de capteurs THz comporte :
un premier capteur THz (1) disposé de façon statique à la première position de mesure (MP1) pour émettre le premier faisceau d'émission THz (20-1) le long d'un axe optique (A) dans la zone de mesure (4) et un second capteur THz (2) disposé de façon statique à la seconde position de mesure (MP2) pour émettre un second faisceau d'émission THz (20-2) le long de l'axe optique (A) dans la zone de mesure (4).

15. Dispositif de mesure THz (34) selon la revendication 13, **caractérisé en ce que** l'agencement de capteurs THz comporte :
au moins un capteur THz (1, 2) et un dispositif de déplacement, p. ex. un guidage rotatif de l'au moins un capteur THz (1, 2) pour encercler partiellement ou en continu la zone de mesure (4) et pour le positionner dans au moins la première et la seconde position de mesure (MP1, MP2).

16. Dispositif de mesure THz (103) selon l'une des revendications 13 à 15, **caractérisé en ce qu'**il comporte plusieurs capteurs THz (1, 2) statiques ou rotatifs, disposés autour de la zone de mesure (4), de préférence avec une orientation de leurs axes optiques (A) sur un centre commun, p. ex. sur un axe d'acheminement (B).

17. Dispositif de mesure THz selon l'une des revendications 13 à 16, **caractérisé en ce qu'**il comporte en outre un dispositif d'acheminement (120) pour acheminer et/ou transporter en continu l'objet de mesure (6) à travers la zone de mesure (4), en particulier le long d'un axe d'acheminement (B) perpendiculaire à l'au moins un axe optique (A).

18. Agencement pour fabriquer un profil d'extrusion, en particulier un profil de tuyau (6) en plastique ou en caoutchouc, avec
un extrudeur (110) pour produire un profil d'extrusion (6), avec au moins un acheminement de matière (112) conçu pour acheminer à l'extrudeur (110) au moins une substance initiale (111), p. ex. sous forme de granulé, de poudre ou de broyat, et
un dispositif de mesure THz selon la revendication 17 avec le dispositif d'acheminement (120) pour acheminer le profil d'extrusion en tant qu'objet de mesure (6) à travers la zone de mesure (4), le dispositif de commande et d'exploitation (100) étant conçu pour déterminer des changements dans le temps dans une composition matérielle et/ou une répartition matérielle du profil de tuyau (6) et pour produire un signal d'affichage et/ou un signal de commande pour commander l'extrudeur (110) et/ou son acheminement de matière (112).

19. Agencement selon la revendication 18, dans lequel l'acheminement de matière (112) est conçu pour acheminer à l'extrudeur (110) plusieurs différentes substances initiales (111) et le dispositif de commande et d'exploitation (100) est conçu pour, à partir de l'indice de réfraction actuellement déterminé du profil d'extrusion, déterminer une composition matérielle actuelle des substances initiales (111).
